# EUROPEAN PATENT APPLICATION

(11) **EP 4 844 028 A1**
(43) Date of publication of application: **25.11.2026**
(21) Application number: 25741823.6
(22) Date of filing: 07.01.2025
(51) Int. Cl.: C08L 101/02, C08F 8/30, C08G 59/50

(54) **CURING AGENT MATERIAL, CURING AGENT, CURABLE COMPOSITION, CURED PRODUCT, AND METHOD FOR PRODUCING CURED PRODUCT**

(30) Priority: 18.01.2024 JP 2024005941
(71) Applicant: ADEKA CORPORATION, Arakawa-ku Tokyo 116-8554 (JP)
(72) Inventor: HASEGAWA, Ryo, Tokyo 116-8554 (JP); ISHIGAMI, Yukako, Tokyo 116-8554 (JP); UEYAMA, Junji, Tokyo 116-8554 (JP); TSUCHIDA, Ryoma, Tokyo 116-8554 (JP)
(74) Representative: Kador & Partner Part mbB
(86) International application number: PCT/JP2025/000171
(87) International publication number: WO 2025/154578

(57) **Abstract**

Provided is a curing agent material, including a compound having a structural unit having a tertiary amine structural group and having a weight-average molecular weight of 5,000 or more and 30,000 or less.

## Description

### Technical Field

This disclosure relates to a curing agent material.

### Background Art

In order to improve the low-temperature curability of an epoxy-based curable composition, a plurality of components are used in combination as curing agents in some cases. For example, in each of Patent Documents 1 and 2, there is a disclosure that a urea derivative serving as a curing accelerator is used in combination with dicyandiamide.

In addition, in Patent Document 3, there is a disclosure that a sulfonamide or the like serving as a curing accelerator is used in combination with imidazole.

### Citation List

### Patent Document

Patent Document 1: JP 3761919 B2
Patent Document 2: JP 3563154 B2
Patent Document 3: JP 4843256 B2

### Summary of Invention

### Technical Problem

However, the curing agent described in Patent Document 1 or the like has a problem in that storage stability is insufficient in some cases.

This disclosure has been made in view of the above-mentioned problem, and is directed to providing a curing agent material capable of forming a curing agent having excellent low-temperature curability and storage stability.

### Solution to Problem

As a result of intensive investigations to solve the above-mentioned problem, the inventors have found that a curing agent having excellent low-temperature curability and storage stability can be formed by a curing agent material including a compound having a specific structure, and have arrived at this disclosure.

That is, this disclosure provides a curing agent material, including a compound having a structural unit having a tertiary amine structural group and having a weight-average molecular weight of 5,000 or more and 30,000 or less.

According to this disclosure, the curing agent material capable of forming a curing agent having excellent low-temperature curability and storage stability can be provided.

The curing agent material of this disclosure is preferably for use in combination with an anionic curing agent. This is because the above-mentioned curing agent material can more effectively exhibit an effect of being capable of forming a curing agent having excellent low-temperature curability and storage stability.

In this disclosure, the above-mentioned tertiary amine structural group preferably has a tertiary amino group. This is because it becomes easier for the above-mentioned curing agent material to form a curing agent having excellent low-temperature curability and storage stability.

In this disclosure, the above-mentioned structural unit having the tertiary amine structural group preferably has at least one of a hydroxy group or a carboxyl group. This is because it becomes easier for the above-mentioned curing agent material to form a curing agent having excellent low-temperature curability and storage stability.

In this disclosure, the above-mentioned structural unit having the tertiary amine structural group preferably has a structural unit represented by the following general formula (100). This is because it becomes easier for the above-mentioned curing agent material to form a curing agent having excellent low-temperature curability and storage stability.

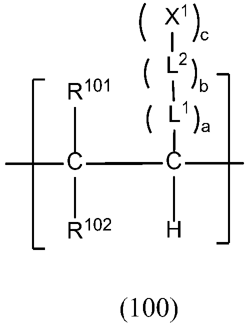

In the formula, R¹⁰¹ and R¹⁰² each independently represent a hydrogen atom, a halogen atom, a cyano group, a nitro group, a hydroxy group, a thiol group, a carboxyl group, a substituted or unsubstituted hydrocarbon group having 1 to 20 carbon atoms, or a group in which a methylene group in the hydrocarbon group is substituted with a divalent group selected from Group B below, L¹ represents a divalent group selected from -O-, -CO-, -CO-O-, -O-CO-, -CO-NR¹⁰³-, and -NR¹⁰³-CO-, R¹⁰³ represents a hydrogen atom, a substituted or unsubstituted hydrocarbon group having 1 to 10 carbon atoms, or a group in which a methylene group in the hydrocarbon group is substituted with a divalent group selected from Group B below, L² represents a (c+1)-valent hydrocarbon group having 1 to 20 carbon atoms or a group in which a methylene group in the hydrocarbon group is substituted with a divalent group selected from Group B below, X¹ represents a tertiary amine structural group, Group B represents - O-, -CO-, -CO-O-, -O-CO-, -NH-, -NHCO-, and -S-, "a" represents an integer of 0 or 1, "b" represents an integer of 0 or 1, and "c" represents an integer of from 1 to 10.

In this disclosure, the content of the above-mentioned structural unit having the tertiary amine structural group is preferably 1 part by mass or more and 99 parts by mass or less in 100 parts by mass of the above-mentioned compound. This is because it becomes easier for the above-mentioned curing agent material to form a curing agent having excellent low-temperature curability and storage stability.

In this disclosure, the above-mentioned compound preferably has, as a structural unit except the above-mentioned structural unit having the tertiary amine structural group, a structural unit derived from at least one compound selected from the group consisting of: a hydroxy group-containing ethylenically unsaturated compound, a carboxyl group-containing ethylenically unsaturated compound, and an aromatic unsaturated compound. This is because it becomes easier for the above-mentioned curing agent material to form a curing agent having excellent low-temperature curability and storage stability.

This disclosure provides a curing agent, including: a compound having a structural unit having a tertiary amine structural group and having a weight-average molecular weight of 5,000 or more and 30,000 or less; and an anionic curing agent.

According to this disclosure, the curing agent having excellent low-temperature curability and storage stability can be provided.

In this disclosure, the above-mentioned anionic curing agent preferably contains an amine-based curing agent. This is because the above-mentioned curing agent is more excellent in low-temperature curability and storage stability.

This disclosure provides a curable composition, including: a compound having a structural unit having a tertiary amine structural group and having a weight-average molecular weight of 5,000 or more and 30,000 or less; and a curable compound.

According to this disclosure, the curable composition having excellent low-temperature curability and storage stability can be provided.

The curable composition of this disclosure preferably includes an anionic curing agent. This is because the above-mentioned curable composition is more excellent in low-temperature curability and storage stability.

This disclosure provides a cured product of the above-mentioned curable composition.

According to this disclosure, when the above-mentioned curable composition is used, the cured product that is easily formed can be provided.

This disclosure provides a method of producing a cured product, the method including a step of heating the above-mentioned curable composition.

According to this disclosure, when the above-mentioned curable composition is used, the method of producing a cured product that facilitates the formation of the above-mentioned cured product can be provided.

This disclosure provides a method of producing a curing agent material, the method including a reaction step of reacting: a polymer having a bonding functional group "b" which is at least one kind of group selected from the group consisting of: a hydroxy group, a carboxyl group, an epoxy group, and an amino group, and having a weight-average molecular weight of 3,000 or more and 25,000 or less; with a compound having a bonding functional group "c" capable of reacting with the above-mentioned bonding functional group "b" to form a covalent bond, and a tertiary amine structural group.

This disclosure provides the method of producing a curing agent material, wherein the above-mentioned polymer has, as a structural unit having the above-mentioned bonding functional group "b", a structural unit derived from an unsaturated dicarboxylic acid or an unsaturated dicarboxylic acid anhydride.

### Advantageous Effects of Invention

According to this disclosure, the curing agent material capable of forming a curing agent having excellent low-temperature curability and storage stability can be provided.

### Description of Embodiments

This disclosure relates to a curing agent material, a curing agent, a curable composition, a cured product, and a method of producing a cured product.

This disclosure is described in detail below.

### A. Curing Agent Material

First, the curing agent material of this disclosure is described.

The curing agent material of this disclosure is characterized by including a compound (hereinafter sometimes referred to as "compound A") having a structural unit having a tertiary amine structural group (hereinafter sometimes referred to as "structural unit A") and having a weight-average molecular weight of 5,000 or more and 30,000 or less.

The curing agent material of this disclosure is capable of forming a curing agent having excellent low-temperature curability and storage stability.

Here, the reason why it becomes possible to form a curing agent having excellent low-temperature curability and storage stability is not clear, but a possible reason is as described below.

That is, the compound A in the above-mentioned curing agent material has a structure in which a tertiary amine structural group, which is an active ingredient of a curing accelerating action, is bonded to a polymer chain. At a temperature lower than a reaction temperature, the above-mentioned tertiary amine structural group is present in a state of being wrapped in the polymer chain by an intermolecular force, such as a hydrogen bond or a van der Waals interaction, with an atom in the polymer chain. In addition, in a state in which such intermolecular force is present, when the polymer chain has a predetermined length, the molecular motion of the polymer can be suppressed. Accordingly, when the weight-average molecular weight falls within a predetermined range, the compound A has low fluidity until a predetermined temperature is reached, and a state in which the above-mentioned tertiary amine structural group is stably wrapped in the polymer chain can be maintained. Further, the nucleophilicity of the tertiary amine is reduced by the presence of the above-mentioned intermolecular force, and hence the exhibition of the curing accelerating action by the tertiary amine structural group itself in the compound A can be suppressed until a predetermined temperature range is reached.

In addition, when the compound A is used in combination with an anionic curing agent, the exhibition of the curing accelerating action of the anionic curing agent and the like can also be suppressed. Moreover, when the weight-average molecular weight falls within a predetermined range, in the case where the compound A is heated to have high fluidity, for example, compatibility and diffusibility with a curable compound to be used in combination can be improved. As a result, the curability of the curable compound or the curing accelerating action of the anionic curing agent can be exhibited without being impaired.

In addition, the compound A has a structure in which a plurality of tertiary amine structural groups are bonded, and hence the density of the tertiary amine structural groups is high. As a result, when a curing reaction resulting from the tertiary amine structural group starts to occur, a state in which the curing reaction easily proceeds in a chain manner occurs, and hence lower-temperature curing can be performed with a smaller addition amount.

Further, when the compound A is used in combination with an anionic curing agent, in the case where a predetermined temperature range is reached and the fluidity of the compound A becomes higher, the compatibility of the above-mentioned anionic curing agent in the curable composition can be improved by the tertiary amine structural groups arranged at high density. As a result, when the anionic curing agent is solid, for example, its melting point can be lowered, and hence it becomes easier to exhibit curability at a lower temperature than that in a case of using the anionic curing agent alone.

Because of the foregoing reason, when the above-mentioned curing agent material contains the compound A, the formation of a curing agent excellent in both low-temperature curability and storage stability is facilitated.

The curing agent material of this disclosure includes the compound A.

Each component of the curing agent material of this disclosure is described in detail below.

### 1. Compound A

The compound A is a compound having a structural unit having a tertiary amine structural group (hereinafter sometimes referred to as "structural unit A") and having a weight-average molecular weight of 5,000 or more and 30,000 or less.

### (1) Weight-average Molecular Weight

The weight-average molecular weight of the compound A only needs to be 5,000 or more and 30,000 or less, and is preferably 7,000 or more and 25,000 or less, more preferably 9,000 or more and 22,000 or less, still more preferably 11,000 or more and 20,000 or less, particularly preferably 13,000 or more and 18,000 or less, most preferably 15,000 or more and 17,000 or less. This is because, when the weight-average molecular weight falls within the above-mentioned ranges, a curing agent material more excellent in low-temperature curability and storage stability is obtained.

Any method capable of accurately measuring the weight-average molecular weight of the compound A may be used as a method of measuring the above-mentioned weight-average molecular weight. For example, the weight-average molecular weight may be determined as a standard polystyrene equivalent value by gel permeation chromatography (GPC) measurement, and may be measured, for example, under the following conditions.

### <Measurement Conditions>

·GPC apparatus: HLC-8320GPC (manufactured by Tosoh Corporation)
·Solvent: DMF (manufactured by FUJIFILM Wako Pure Chemical Corporation)/10 mM LiBr solution
·Flow rate: 0.6 mL/min
·Column: TSKgel guardcolumn SuperAW-H (4.6 mm I.D.×3.5 cm)×1+TSKgel SuperAWM-H (6.0 mm I.D.×15 cm)×2 (manufactured by Tosoh Corporation)

As column pretreatment, a DMF/100 mM triethylamine solution is passed through the column before measurement to mask an adsorption site in advance.
·Column temperature: 40°C
·Sample concentration: 1 mg/mL
·Injection volume: 20 µL
·Polystyrene standards for calibration curve: Mw 5,480,000, 1,090,000, 427,000, 96,400, 37,900, 10,200, 2,550, and 598 (manufactured by Tosoh Corporation)

### (2) Structural Unit having Tertiary Amine Structural Group

The structural unit A has a tertiary amine structural group.

The term "tertiary amine structure" refers to a structure in which the three bonding sites of a nitrogen atom each form a covalent bond with a hydrocarbon-based carbon atom. Accordingly, when a carbon atom to which a nitrogen atom is bonded is a carbon atom for forming a carbonyl group, that is, when an amide group, a urea structure, a urethane structure, or the like is formed together with the nitrogen atom, the structure does not correspond to the tertiary amine structure.

Examples of such tertiary amine structural group include a cyclic tertiary amino group in which a nitrogen atom for forming a tertiary amine structure is included as a ring-forming atom, a tertiary amino group in which a nitrogen atom for forming a tertiary amine structure is not included as a ring-forming atom, and a group obtained by combining the above-mentioned cyclic tertiary amino group and tertiary amino group.

In this disclosure, the tertiary amine structural group is preferably a tertiary amine structural group having the above-mentioned tertiary amino group, more preferably a tertiary amino group. This is because it becomes easier for the above-mentioned curing agent material to form a curing agent having excellent low-temperature curability and storage stability.

The tertiary amino group may be a group in which the two hydrogen atoms of an amino group (-NH₂) are substituted with hydrocarbon groups, and may be, for example, a group represented by the following general formula (1): 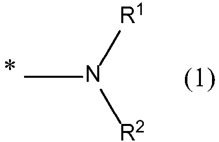 where R¹ and R² each independently represent a substituted or unsubstituted hydrocarbon group having 1 to 20 carbon atoms, or a group in which a methylene group in the hydrocarbon group is substituted with a divalent group selected from Group A below, * represents a bonding site, Group A represents -O-, -CO-, -CO-O-, - O-CO-, -NR¹¹CO-, and -S-, and R¹¹ represents a hydrogen atom or a hydrocarbon group having 1 to 10 carbon atoms.

Examples of the hydrocarbon group having 1 to 20 carbon atoms include an aliphatic hydrocarbon group having 1 to 20 carbon atoms and an aromatic hydrocarbon ring-containing group having 6 to 20 carbon atoms.

The aliphatic hydrocarbon group having 1 to 20 carbon atoms may be a hydrocarbon group free of an aromatic hydrocarbon ring or a heterocyclic ring, and examples thereof include a chain aliphatic hydrocarbon group having 1 to 20 carbon atoms and an aliphatic ring-containing group having 3 to 20 carbon atoms.

Examples of the above-mentioned chain aliphatic hydrocarbon group having 1 to 20 carbon atoms include an alkyl group having 1 to 20 carbon atoms and an alkenyl group having 2 to 20 carbon atoms.

Examples of the above-mentioned aliphatic ring-containing group having 3 to 20 carbon atoms include a cycloalkyl group having 3 to 20 carbon atoms and a cycloalkylalkyl group having 4 to 20 carbon atoms.

The above-mentioned alkyl group having 1 to 20 carbon atoms may be linear or branched. Examples of the linear alkyl group include a methyl group, an ethyl group, a propyl group, a butyl group, an iso-amyl group, a tert-amyl group, a hexyl group, a heptyl group, and an octyl group. Examples of the branched alkyl group include an iso-propyl group, a sec-butyl group, a tert-butyl group, an iso-butyl group, an iso-pentyl group, a tert-pentyl group, a 2-hexyl group, a 3-hexyl group, a 2-heptyl group, a 3-heptyl group, an iso-heptyl group, a tert-heptyl group, an iso-octyl group, a tert-octyl group, a 2-ethylhexyl group, a nonyl group, an isononyl group, a decyl group, a dodecyl group, a tridecyl group, a tetradecyl group, a pentadecyl group, a hexadecyl group, a heptadecyl group, and an octadecyl group.

The above-mentioned alkenyl group having 2 to 20 carbon atoms may be linear or branched. In addition, the alkenyl group may be a terminal alkenyl group having an unsaturated bond at a terminal, or an internal alkenyl group having an unsaturated bond inside. Examples of the terminal alkenyl group include a vinyl group, an allyl group, a 2-methyl-2-propenyl group, a 3-butenyl group, a 4-pentenyl group, and a 5-hexenyl group. Examples of the internal alkenyl group include a 2-butenyl group, a 3-pentenyl group, a 2-hexenyl group, a 3-hexenyl group, a 2-heptenyl group, a 3-heptenyl group, a 4-heptenyl group, a 3-octenyl group, a 3-nonenyl group, a 4-decenyl group, a 3-undecenyl group, a 4-dodecenyl group, and a 4,8,12-tetradecatrienylallyl group.

Examples of the above-mentioned cycloalkyl group having 3 to 20 carbon atoms include a saturated monocyclic alkyl group having 3 to 20 carbon atoms, a saturated polycyclic alkyl group having 3 to 20 carbon atoms, and a group having 4 to 20 carbon atoms in which one or more hydrogen atoms in a ring of any of these groups are substituted with alkyl groups. Examples of the above-mentioned saturated monocyclic alkyl group include a cyclopropyl group, a cyclobutyl group, a cyclopentyl group, a cyclohexyl group, a cycloheptyl group, a cyclooctyl group, a cyclononyl group, and a cyclodecyl group. Examples of the above-mentioned saturated polycyclic alkyl group include an adamantyl group, a decahydronaphthyl group, an octahydropentalene group, and a bicyclo[1.1.1]pentanyl group. Examples of the alkyl group for substituting a hydrogen atom in a ring of the saturated monocyclic or saturated polycyclic alkyl group include the groups exemplified as the above-mentioned alkyl group having 1 to 20 carbon atoms. An example of the group in which one or more hydrogen atoms in a ring of the saturated polycyclic alkyl group are substituted with alkyl groups is a bornyl group.

The term "cycloalkylalkyl group having 4 to 20 carbon atoms" described above means a group having 4 to 20 carbon atoms in which a hydrogen atom of an alkyl group is substituted with a cycloalkyl group. The cycloalkyl group in the cycloalkylalkyl group may be monocyclic or polycyclic. Examples of the cycloalkylalkyl group having 4 to 20 carbon atoms in which the cycloalkyl group is monocyclic include a cyclopropylmethyl group, a 2-cyclobutylethyl group, a 3-cyclopentylpropyl group, a 4-cyclohexylbutyl group, a cycloheptylmethyl group, a cyclooctylmethyl group, a 2-cyclononylethyl group, and a 2-cyclodecylethyl group. Examples of the cycloalkylalkyl group having 4 to 20 carbon atoms in which the cycloalkyl group is polycyclic include a 3-3-adamantylpropyl group and a decahydronaphthylpropyl group.

The above-mentioned aromatic hydrocarbon ring-containing group having 6 to 20 carbon atoms is a hydrocarbon group containing an aromatic hydrocarbon ring and free of a heterocyclic ring, and may have an aliphatic hydrocarbon structure.

Examples of such aromatic hydrocarbon ring-containing group include an aryl group having 6 to 20 carbon atoms and an arylalkyl group having 7 to 20 carbon atoms.

The above-mentioned aryl group having 6 to 20 carbon atoms may have a monocyclic structure, a fused ring structure, or a structure in which two aromatic hydrocarbon rings are linked.

The aryl group in which two aromatic hydrocarbon rings are linked may be a group in which two aromatic hydrocarbon rings each having a monocyclic structure are linked, a group in which an aromatic hydrocarbon ring having a monocyclic structure and an aromatic hydrocarbon ring having a fused ring structure are linked, or a group in which an aromatic hydrocarbon ring having a fused ring structure and another aromatic hydrocarbon ring having a fused ring structure are linked.

A linking group for linking two aromatic hydrocarbon rings is not limited as long as an aryl group having aromaticity as a whole is obtained, and examples thereof include a single bond, a sulfide group (-S-), and a carbonyl group.

The aryl group may include not only a group obtained by removing one hydrogen atom from an aromatic hydrocarbon ring (hereinafter sometimes referred to as "aromatic ring group"), but also a group in which one or two or more hydrogen atoms in the aromatic ring group are substituted with substituted or unsubstituted aliphatic hydrocarbon groups each having 1 to 15 carbon atoms.

Examples of the aryl group having a monocyclic structure include: a phenyl group; and alkylphenyl groups, such as a tolyl group, a xylyl group, an ethylphenyl group, and a 2,4,6-trimethylphenyl group.

Examples of the aryl group having a fused ring structure include a naphthyl group, an anthracenyl group, a phenanthryl group, and a pyrenyl group.

Examples of the aryl group in which two aromatic hydrocarbon rings each having a monocyclic structure are linked include a biphenyl group, a diphenyl sulfide group, and a benzoylphenyl group.

The term "arylalkyl group having 7 to 20 carbon atoms" described above means a group in which one or more hydrogen atoms in an alkyl group are substituted with aryl groups. Examples of the arylalkyl group having 7 to 20 carbon atoms include a benzyl group, a fluorenyl group, an indenyl group, a 9-fluorenylmethyl group, an α-methylbenzyl group, an α,α-dimethylbenzyl group, a phenylethyl group, and a naphthylpropyl group.

In this disclosure, the term "substituted hydrocarbon group" refers to a group in which a hydrogen atom in a hydrocarbon group is substituted with a substituent.

Examples of such substituent for substituting a hydrogen atom in the hydrocarbon group include a halogen atom, a cyano group, a nitro group, a hydroxy group, a thiol group, a carboxyl group, and an amino group.

A group in which one or more methylene groups in the hydrocarbon group are each substituted with a divalent group selected from Group A above is free of a structure in which a plurality of divalent groups are adjacent to each other. The plurality of divalent groups may be identical to or different from each other.

Examples of the hydrocarbon group having 1 to 10 carbon atoms include an aliphatic hydrocarbon group having 1 to 10 carbon atoms and an aromatic hydrocarbon ring-containing group having 6 to 10 carbon atoms.

The aliphatic hydrocarbon group having 1 to 10 carbon atoms may be a hydrocarbon group free of an aromatic hydrocarbon ring or a heterocyclic ring, and examples thereof include a chain aliphatic hydrocarbon group having 1 to 10 carbon atoms and an aliphatic ring-containing group having 3 to 10 carbon atoms.

Examples of the above-mentioned chain aliphatic hydrocarbon group having 1 to 10 carbon atoms include an alkyl group having 1 to 10 carbon atoms and an alkenyl group having 2 to 10 carbon atoms.

Examples of the above-mentioned aliphatic ring-containing group having 3 to 10 carbon atoms include a cycloalkyl group having 3 to 10 carbon atoms and a cycloalkylalkyl group having 4 to 10 carbon atoms.

The above-mentioned alkyl group having 1 to 10 carbon atoms may be linear or branched. Examples of the linear alkyl group include a methyl group, an ethyl group, a propyl group, a butyl group, an iso-amyl group, a tert-amyl group, a hexyl group, a heptyl group, and an octyl group. Examples of the branched alkyl group include an iso-propyl group, a sec-butyl group, a tert-butyl group, an iso-butyl group, an iso-pentyl group, a tert-pentyl group, a 2-hexyl group, a 3-hexyl group, a 2-heptyl group, a 3-heptyl group, an iso-heptyl group, a tert-heptyl group, an iso-octyl group, a tert-octyl group, a 2-ethylhexyl group, a nonyl group, an isononyl group, and a decyl group.

The above-mentioned alkenyl group having 2 to 10 carbon atoms may be linear or branched. In addition, the alkenyl group may be a terminal alkenyl group having an unsaturated bond at a terminal, or an internal alkenyl group having an unsaturated bond inside. Examples of the terminal alkenyl group include a vinyl group, an allyl group, a 2-methyl-2-propenyl group, a 3-butenyl group, a 4-pentenyl group, and a 5-hexenyl group. Examples of the internal alkenyl group include a 2-butenyl group, a 3-pentenyl group, a 2-hexenyl group, a 3-hexenyl group, a 2-heptenyl group, a 3-heptenyl group, a 4-heptenyl group, a 3-octenyl group, a 3-nonenyl group, and a 4-decenyl group.

Examples of the above-mentioned cycloalkyl group having 3 to 10 carbon atoms include a saturated monocyclic alkyl group having 3 to 10 carbon atoms, a saturated polycyclic alkyl group having 3 to 10 carbon atoms, and a group having 4 to 10 carbon atoms in which one or more hydrogen atoms in a ring of any of these groups are substituted with alkyl groups. Examples of the above-mentioned saturated monocyclic alkyl group include a cyclopropyl group, a cyclobutyl group, a cyclopentyl group, a cyclohexyl group, a cycloheptyl group, a cyclooctyl group, a cyclononyl group, and a cyclodecyl group. Examples of the above-mentioned saturated polycyclic alkyl group include an adamantyl group, a decahydronaphthyl group, an octahydropentalene group, and a bicyclo[1.1.1]pentanyl group. Examples of the alkyl group for substituting a hydrogen atom in a ring of the saturated monocyclic or saturated polycyclic alkyl group include the groups exemplified as the above-mentioned alkyl group having 1 to 10 carbon atoms. An example of the group in which one or more hydrogen atoms in a ring of the saturated polycyclic alkyl group are substituted with alkyl groups is a bornyl group.

The term "cycloalkylalkyl group having 4 to 10 carbon atoms" described above means a group having 4 to 10 carbon atoms in which a hydrogen atom of an alkyl group is substituted with a cycloalkyl group. The cycloalkyl group in the cycloalkylalkyl group may be monocyclic or polycyclic. Examples of the cycloalkylalkyl group having 4 to 10 carbon atoms in which the cycloalkyl group is monocyclic include a cyclopropylmethyl group, a 2-cyclobutylethyl group, a 3-cyclopentylpropyl group, a 4-cyclohexylbutyl group, a cycloheptylmethyl group, and a cyclooctylmethyl group. Examples of the cycloalkylalkyl group having 4 to 10 carbon atoms in which the cycloalkyl group is polycyclic include a norbornylethyl group and an isonorbornylethyl group.

The above-mentioned aromatic hydrocarbon ring-containing group having 6 to 10 carbon atoms is a hydrocarbon group containing an aromatic hydrocarbon ring and free of a heterocyclic ring, and may have an aliphatic hydrocarbon structure.

Examples of such aromatic hydrocarbon ring-containing group include an aryl group having 6 to 10 carbon atoms and an arylalkyl group having 7 to 10 carbon atoms.

The above-mentioned aryl group having 6 to 10 carbon atoms may have a monocyclic structure or a fused ring structure.

Examples of the aryl group having a monocyclic structure include: a phenyl group; and alkylphenyl groups, such as a tolyl group, a xylyl group, an ethylphenyl group, and a 2,4,6-trimethylphenyl group.

An example of the aryl group having a fused ring structure is a naphthyl group.

The term "arylalkyl group having 7 to 10 carbon atoms" described above means a group in which one or more hydrogen atoms in an alkyl group are substituted with aryl groups. Examples of the arylalkyl group having 7 to 10 carbon atoms include a benzyl group, an indenyl group, an α-methylbenzyl group, an α,α-dimethylbenzyl group, and a phenylethyl group.

In this disclosure, the number of carbon atoms defines the number of the carbon atoms of a target group, such as R¹ or R², and when a hydrogen atom in a hydrocarbon group is substituted with a substituent, the number of the carbon atoms of the hydrocarbon group after the substitution is defined. For example, in the case of a "group in which a hydrogen atom of an alkyl group having 10 carbon atoms is substituted with a substituent," the term "10 carbon atoms" refers to the number of the carbon atoms of the "alkyl group after the hydrogen atom is substituted with a substituent" and does not refer to the number of the carbon atoms of the alkyl group before the hydrogen atom is substituted.

In addition, in this disclosure, the term "number of the carbon atoms of a group in which a methylene group in a hydrocarbon group is substituted with a divalent group" refers to the number of the carbon atoms of the group after the substitution. For example, in the case of a "group in which a methylene group in an alkyl group having 10 carbon atoms is substituted with a divalent group," the term "10 carbon atoms" refers to the number of the carbon atoms of the "alkyl group after the methylene group is substituted with a divalent group" and does not refer to the number of the carbon atoms of the alkyl group before the substitution.

R¹ and R² each independently represent a substituted or unsubstituted hydrocarbon group having 1 to 20 carbon atoms, or a group in which a methylene group in the hydrocarbon group is substituted with a divalent group selected from Group A above, and each represent preferably a substituted or unsubstituted hydrocarbon group having 1 to 20 carbon atoms, more preferably an unsubstituted hydrocarbon group having 1 to 20 carbon atoms. This is because it becomes easier for the above-mentioned curing agent material to form a curing agent more excellent in low-temperature curability and storage stability.

In this disclosure, the hydrocarbon group used for each of R¹ and R² may be linear or branched, and is preferably linear. This is because it becomes easier for the above-mentioned curing agent material to form a curing agent more excellent in low-temperature curability and storage stability.

In this disclosure, the numbers of the carbon atoms of R¹ and R² are each independently preferably 1 or more and 10 or less, more preferably 1 or more and 5 or less, still more preferably 1 or more and 3 or less, particularly preferably 1 or 2 (i.e., R¹ and R² each represent a dimethylamino group or a diethylamino group), most preferably 1 (i.e., R¹ and R² each represent a dimethylamino group). This is because it becomes easier for the above-mentioned curing agent material to form a curing agent more excellent in low-temperature curability and storage stability.

The above-mentioned cyclic tertiary amino group only needs to be a group having a nitrogen atom for forming a tertiary amine structure as a ring-forming atom and having the ring-forming atom as a bonding site. In addition, the ring-forming atom serving as a bonding site may be a nitrogen atom or a carbon atom.

Examples of such cyclic tertiary amino group include a quinuclidine group, an imidazole group, a pyrazole group, a triazole group, an imidazoline group, a tetrazole group, a triethylenediamine group, an N-substituted morpholine group obtained by removing one hydrogen atom from an N-substituted morpholine ring, an N-substituted piperidine group obtained by removing one hydrogen atom from the piperidine ring of an N-substituted piperidine ring, an N-substituted piperazine group obtained by removing one hydrogen atom from the piperazine ring of an N-substituted piperazine ring, and an N,N-substituted piperazine group obtained by removing one hydrogen atom from the piperazine ring of a N,N-substituted piperazine ring.

The term "N-substituted" indicates that a hydrogen atom bonded to a nitrogen atom for forming a cyclic secondary amine structure is substituted with a hydrocarbon group to form a cyclic tertiary amine structure. The term "N,N-substituted" indicates that hydrogen atoms bonded to two nitrogen atoms for forming a cyclic secondary amine structure are each substituted with a hydrocarbon group to form two cyclic tertiary amine structures.

Examples of the group obtained by combining the above-mentioned cyclic tertiary amino group and tertiary amino group include a group obtained by combining cyclic tertiary amino groups, a group obtained by combining tertiary amino groups, and a group obtained by combining a cyclic tertiary amino group and a tertiary amino group.

An example of the group obtained by combining cyclic tertiary amino groups may be a group in which one or two or more hydrogen atoms in a cyclic tertiary amino group are each substituted with the above-mentioned cyclic tertiary amino group.

An example of the group obtained by combining tertiary amino groups may be a group in which one or two or more hydrogen atoms in a tertiary amino group are each substituted with the above-mentioned tertiary amino group.

Examples of the group obtained by combining a cyclic tertiary amino group and a tertiary amino group include a group in which one or two or more hydrogen atoms in a tertiary amino group are each substituted with the above-mentioned cyclic tertiary amino group, and a group in which one or two or more hydrogen atoms in the above-mentioned cyclic tertiary amino group are each substituted with the above-mentioned tertiary amino group.

The structure of the repeating site of the structural unit A may be any structure, such as a structure derived from an ethylenically unsaturated compound, a polyester structure, a polyurethane structure, a polyether structure, or a polycarbonate structure, or structural units having different structures may be combined.

In this disclosure, the structure of the repeating site of the structural unit A preferably has a structure derived from an ethylenically unsaturated compound. This is because it becomes easier for the above-mentioned curing agent material to form a curing agent more excellent in low-temperature curability and storage stability.

The structural unit A has a tertiary amine structural group, but may have another functional group except the tertiary amine structural group.

Examples of such functional group include a halogen atom, a cyano group, a nitro group, a hydroxy group, a thiol group, and a carboxyl group.

In this disclosure, the structural unit A has, as the above-mentioned other functional group, preferably at least one of a hydroxy group or a carboxyl group, more preferably a carboxyl group. This is because it becomes easier for the above-mentioned curing agent material to form a curing agent more excellent in low-temperature curability and storage stability, particularly more excellent in storage stability.

The reason why a curing agent material more excellent in low-temperature curability and storage stability, particularly more excellent in storage stability is obtained when the curing agent material has the above-mentioned other functional group is not clear, but a possible reason is as describe below.

That is, a nitrogen atom for forming the tertiary amine structure in the structural unit A can interact with the above-mentioned other functional group through a hydrogen bond, an ionic bond, or the like to suppress the molecular motion of the compound A itself, and hence it becomes easier to further lower the fluidity thereof. As a result, it becomes easier to, for example, keep the compound A in a solid state, and the exhibition of its curing accelerating action can be more easily suppressed until a predetermined temperature range is reached.

For those reasons, it becomes easier for the above-mentioned curing agent material to form a curing agent more excellent in storage stability.

When the structure of the repeating site of the structural unit A is a structure derived from an ethylenically unsaturated compound, the above-mentioned other functional group may be bonded to the same carbon atom as a carbon atom to which the above-mentioned tertiary amine structural group is bonded among two carbon atoms derived from the ethylenically unsaturated compound for forming the repeating site. However, it is preferred that the other functional group be bonded to a different carbon atom, that is, the above-mentioned tertiary amine structural group be bonded to one carbon atom among the two carbon atoms derived from the ethylenically unsaturated compound for forming the repeating site, and the above-mentioned other functional group be bonded to the other carbon atom. This is because it becomes easier for the above-mentioned curing agent material to form a curing agent more excellent in low-temperature curability and storage stability.

The phrase "the tertiary amine structural group is bonded" described above is not limited to a case in which a tertiary amino group, a cyclic tertiary amino group, or the like for forming the tertiary amine structural group is directly bonded, and also encompasses a case in which the group is indirectly bonded via another atom.

In addition, similarly, the phrase "the other functional group is bonded" described above is not limited to a case in which the above-mentioned other functional group is directly bonded, and also encompasses a case in which the group is indirectly bonded via another atom.

The structural unit A preferably has a structural unit represented by the following general formula (100). This is because it becomes easier for the above-mentioned curing agent material to form a curing agent more excellent in low-temperature curability and storage stability.

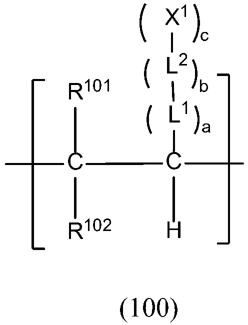

In the formula, R¹⁰¹ and R¹⁰² each independently represent a hydrogen atom, a halogen atom, a cyano group, a nitro group, a hydroxy group, a thiol group, a carboxyl group, a substituted or unsubstituted hydrocarbon group having 1 to 20 carbon atoms, or a group in which a methylene group in the hydrocarbon group is substituted with a divalent group selected from Group B below, L¹ represents a divalent group selected from -O-, -CO-, -CO-O-, -O-CO-, -CO-NR¹⁰³-, and -NR¹⁰³-CO-, R¹⁰³ represents a hydrogen atom, a substituted or unsubstituted hydrocarbon group having 1 to 10 carbon atoms, or a group in which a methylene group in the hydrocarbon group is substituted with a divalent group selected from Group B below, L² represents a (c+1)-valent hydrocarbon group having 1 to 20 carbon atoms or a group in which a methylene group in the hydrocarbon group is substituted with a divalent group selected from Group B below, X¹ represents a tertiary amine structural group, Group B represents - O-, -CO-, -CO-O-, -O-CO-, -NH-, -NHCO-, and -S-, "a" represents an integer of 0 or 1, "b" represents an integer of 0 or 1, and "c" represents an integer of from 1 to 10.

The descriptions regarding the hydrocarbon group having 1 to 20 carbon atoms used for each of R¹⁰¹ and R¹⁰² may be the same as those described as the hydrocarbon group used for the above-mentioned R¹, and hence descriptions thereof in this section are omitted.

The descriptions regarding the hydrocarbon group having 1 to 10 carbon atoms used for R¹⁰³ may be the same as those described as the hydrocarbon group used for the above-mentioned R¹¹, and hence descriptions thereof in this section are omitted.

Examples of the (c+1)-valent hydrocarbon group used for L² include groups each obtained by removing "c" hydrogen atoms from the hydrocarbon group described as the group to be used for the above-mentioned R¹.

The above-mentioned R¹⁰¹ represents preferably a hydrogen atom, a hydroxy group, or a carboxyl group, more preferably a hydroxy group or a carboxyl group, still more preferably a carboxyl group. This is because it becomes easier for the above-mentioned curing agent material to form a curing agent more excellent in low-temperature curability and storage stability.

The above-mentioned R¹⁰² represents preferably a hydrogen atom, a substituted or unsubstituted hydrocarbon group having 1 to 20 carbon atoms, or a group in which a methylene group in the hydrocarbon group is substituted with a divalent group selected from Group B above, more preferably a hydrogen atom, a substituted or unsubstituted hydrocarbon group having 1 to 10 carbon atoms, or a group in which a methylene group in the hydrocarbon group is substituted with a divalent group selected from Group B above, still more preferably a hydrogen atom, or a substituted or unsubstituted hydrocarbon group having 1 to 3 carbon atoms, particularly preferably a hydrogen atom or an unsubstituted hydrocarbon group having 1 to 3 carbon atoms, most preferably a hydrogen atom. This is because it becomes easier for the above-mentioned curing agent material to form a curing agent more excellent in low-temperature curability and storage stability.

The above-mentioned L¹ represents a divalent group selected from -O-, - CO-, -CO-O-, -O-CO-, -CO-NR¹⁰³-, and -NR¹⁰³-CO-, preferably a divalent group selected from -CO-, -CO-O-, and -O-CO-, more preferably -CO- or -CO-O-, still more preferably -CO-O-. This is because it becomes easier for the above-mentioned curing agent material to form a curing agent more excellent in low-temperature curability and storage stability.

The term "-CO-O-" to be used for L¹ indicates that "CO" is bonded to a carbon atom for forming the repeating site of the structural unit A, and "O" is bonded to L². The terms "-O-CO-", "-CO-NR¹⁰³-", and "-NR¹⁰³-CO-" similarly indicate that "CO", "NR¹⁰³", and "CO" are bonded to L², respectively.

"c" represents the number of X¹ groups bonded to L².

Such "c" only needs be an integer of from 1 to 10, and is preferably from 1 to 5, more preferably from 2 to 4, still more preferably 2 or 3, particularly preferably 3. This is because it becomes easier for the above-mentioned curing agent material to form a curing agent more excellent in low-temperature curability and storage stability.

The hydrocarbon group used for L² is preferably a (c+1)-valent aliphatic hydrocarbon group having 1 to 20 carbon atoms or a (c+1)-valent aromatic hydrocarbon ring-containing group having 6 to 20 carbon atoms, more preferably a (c+1)-valent aliphatic hydrocarbon group having 1 to 10 carbon atoms or a (c+1)-valent aromatic hydrocarbon ring-containing group having 6 to 15 carbon atoms, still more preferably a (c+1)-valent aliphatic hydrocarbon group having 1 to 5 carbon atoms or a (c+1)-valent aromatic hydrocarbon ring-containing group having 7 to 10 carbon atoms, particularly preferably a (c+1)-valent aromatic hydrocarbon ring-containing group having 8 to 10 carbon atoms. This is because it becomes easier for the above-mentioned curing agent material to form a curing agent more excellent in low-temperature curability and storage stability.

The (c+1)-valent aromatic hydrocarbon ring-containing group used for L² is preferably a group obtained by removing "c" hydrogen atoms from an aryl group or an arylalkyl group, more preferably a group obtained by removing "c" hydrogen atoms from an aryl group, still more preferably a group obtained by removing "c" hydrogen atoms from an alkylphenyl group. This is because it becomes easier for the above-mentioned curing agent material to form a curing agent more excellent in low-temperature curability and storage stability.

When "c" represents 3, the (c+1)-valent alkylphenyl group used for L² is preferably a group obtained by removing one hydrogen atom from each of the three alkyl groups of a trialkylphenyl group, more preferably a group obtained by removing one hydrogen atom from each of the three methyl groups of a 2,4,6-trimethylphenyl group. This is because it becomes easier for the above-mentioned curing agent material to form a curing agent more excellent in low-temperature curability and storage stability.

The descriptions regarding preferred groups for X¹ may be the same as those for the preferred groups of the above-mentioned tertiary amine structural group, and hence descriptions thereof in this section are omitted.

With regard to the arrangement of the structural unit A, the structural unit A may be in the main chain of the compound A or a side chain thereof, and is preferably in the main chain. This is because it becomes easier for the above-mentioned curing agent material to form a curing agent more excellent in low-temperature curability and storage stability.

The content of the structural unit A is preferably 1 part by mass or more and 99 parts by mass or less, more preferably 30 parts by mass or more and 70 parts by mass or less, still more preferably 40 parts by mass or more and 60 parts by mass or less, particularly preferably 50 parts by mass or more and 55 parts by mass or less, most preferably 52 parts by mass or more and 55 parts by mass or less in 100 parts by mass of the compound A. This is because it becomes easier for the above-mentioned curing agent material to form a curing agent more excellent in low-temperature curability and storage stability.

The content of the structural unit A is preferably 1 mol or more and 99 mol or less, more preferably 5 mol or more and 60 mol or less, still more preferably 10 mol or more and 50 mol or less, particularly preferably 15 mol or more and 40 mol or less, most preferably 20 mol or more and 30 mol or less in 100 mol of all structural units in the compound A. This is because it becomes easier for the above-mentioned curing agent material to form a curing agent more excellent in low-temperature curability and storage stability.

Any method capable of producing a compound having the structural unit A may be used as a method of producing the compound A.

When the structure of the repeating site of the structural unit A is a structure derived from an ethylenically unsaturated compound, an example of such production method is a method including using: an ethylenically unsaturated compound (hereinafter sometimes referred to as "compound B") having a bonding functional group "b"; and a compound (hereinafter sometimes referred to as "compound C") having a functional group capable of reacting with the bonding functional group "b" to form a covalent bond (hereinafter referred to as "bonding functional group "c"") and a tertiary amine structural group.

More specifically, examples thereof include: a method including homopolymerizing a reaction product of the compound B and the compound C or copolymerizing the reaction product with another ethylenically unsaturated compound (hereinafter sometimes referred to as "Method 1"); and a method including reacting the compound C with the bonding functional group "b" derived from the compound B after homopolymerizing the compound B or copolymerizing the compound B with another ethylenically unsaturated compound, that is, a method including reacting the compound C with a polymer having the bonding functional group "b" (hereinafter sometimes referred to as "Method 2").

In this disclosure, each of Method 1 and Method 2 may be used as the above-mentioned production method, but Method 2 is preferred because the production of the compound A is facilitated.

Examples of the bonding functional group "b" include a hydroxy group, a carboxyl group, an epoxy group, and an amino group.

The concept of the carboxyl group serving as the bonding functional group "b" also encompasses a dicarboxylic acid anhydride structure. In this case, the dicarboxylic acid anhydride structure serving as the bonding functional group "b" may share part thereof with an ethylenically unsaturated bond site.

Examples of the compound B include a hydroxy group-containing ethylenically unsaturated compound, a carboxyl group-containing ethylenically unsaturated compound, an epoxy group-containing ethylenically unsaturated compound, and an amino group-containing ethylenically unsaturated compound.

In this disclosure, the bonding functional group "b" is preferably a hydroxy group, a carboxyl group, or an amino group, more preferably a hydroxy group or a carboxyl group, still more preferably a carboxyl group. This is because it becomes easier for the above-mentioned curing agent material to form a curing agent more excellent in low-temperature curability and storage stability.

That is, the compound B is preferably a hydroxy group-containing ethylenically unsaturated compound, a carboxyl group-containing ethylenically unsaturated compound, or an amino group-containing ethylenically unsaturated compound, more preferably a hydroxy group-containing ethylenically unsaturated compound or a carboxyl group-containing ethylenically unsaturated compound, still more preferably a carboxyl group-containing ethylenically unsaturated compound. This is because it becomes easier for the above-mentioned curing agent material to form a curing agent more excellent in low-temperature curability and storage stability.

Examples of the hydroxy group-containing ethylenically unsaturated compound include: hydroxyalkyl methacrylates, such as 2-hydroxyethyl (meth)acrylate, 2- or 3-hydroxypropyl (meth)acrylate, 2-, 3-, or 4-hydroxybutyl (meth)acrylate, glycerol mono(meth)acrylate, and cyclohexanedimethanol mono(meth)acrylate; and polyether mono(meth)acrylates obtained by the addition polymerization of, for example, ethylene oxide, propylene oxide, and/or butylene oxide to the above-mentioned hydroxyalkyl (meth)acrylates, and polyester mono(meth)acrylates to which poly-γ-valerolactone, poly-ε-caprolactone, and/or poly-12-hydroxystearic acid or the like is added.

Examples of the carboxyl group-containing ethylenically unsaturated compound include: unsaturated monocarboxylic acids, such as acrylic acid, methacrylic acid, crotonic acid, ε-caprolactone-added acrylic acid, ε-caprolactone-added methacrylic acid, an adduct of the above-mentioned hydroxy group-containing ethylenically unsaturated compound with a carboxylic acid anhydride, for example, 2-(meth)acryloyloxyethyl hexahydrophthalate, 2-(meth)acryloyloxypropyl hexahydrophthalate, or ethylene oxide-modified succinic acid (meth)acrylate, β-carboxyethyl (meth)acrylate, and ω-carboxypolycaprolactone (meth)acrylate; unsaturated dicarboxylic acids, such as itaconic acid, maleic acid, and fumaric acid; and unsaturated dicarboxylic acid anhydrides, such as itaconic anhydride and maleic anhydride.

In this disclosure, the carboxyl group-containing ethylenically unsaturated compound is preferably an unsaturated dicarboxylic acid or an unsaturated dicarboxylic acid anhydride, more preferably an unsaturated dicarboxylic acid anhydride, still more preferably maleic anhydride. This is because it becomes easier for the above-mentioned curing agent material to form a curing agent more excellent in low-temperature curability and storage stability. This is also because the addition of the above-mentioned tertiary amine structural group is facilitated.

Examples of the epoxy group-containing ethylenically unsaturated compound include glycidyl (meth)acrylate, methyl glycidyl (meth)acrylate, 2-glycidoxyethyl (meth)acrylate, 3,4-epoxybutyl (meth)acrylate, and 3,4-epoxycyclohexyl (meth)acrylate.

Examples of the amino group-containing ethylenically unsaturated compound include (meth)acrylamide, N-methoxymethyl-(meth)acrylamide, N-ethoxymethyl-(meth)acrylamide, N-propoxymethyl-(meth)acrylamide, N-butoxymethyl-(meth)acrylamide, and N-pentoxymethyl-(meth)acrylamide.

The above-mentioned bonding functional group "c" is preferably a hydroxy group, a carboxyl group, or an amino group, more preferably a hydroxy group or a carboxyl group, still more preferably a hydroxy group. This is because it becomes easier for the above-mentioned curing agent material to form a curing agent more excellent in low-temperature curability and storage stability.

For example, a compound represented by the following general formula (2) may be used as the compound C: 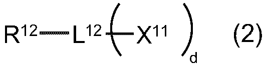 where R¹² represents a hydroxy group, a carboxyl group, or an amino group, L¹² represents a (d+1)-valent hydrocarbon group having 1 to 20 carbon atoms or a group in which a methylene group in the hydrocarbon group is substituted with a divalent group selected from Group C below, X¹¹ represents a tertiary amine structural group, Group C represents -O-, -CO-, -CO-O-, -O-CO-, -NH-, -NHCO-, and -S-, and "d" represents an integer of from 1 to 10.

The amino group used for R¹² may be a group having an active hydrogen group, and a primary amino group (-NH₂) or a secondary amino group (-NHR²¹) may be used.

For example, a hydrocarbon group having 1 to 10 carbon atoms may be used as R²¹. The descriptions regarding the hydrocarbon group having 1 to 10 carbon atoms may be the same as those described as the hydrocarbon group used for the above-mentioned R¹¹, and hence descriptions thereof in this section are omitted.

Examples of the (d+1)-valent hydrocarbon group having 1 to 20 carbon atoms used for L¹² include groups each obtained by removing "d" hydrogen atoms from the hydrocarbon group described as the hydrocarbon group used for the above-mentioned R¹.

The descriptions regarding such preferred groups for L¹² and the like may be the same as those described as the preferred groups for the above-mentioned L², and hence descriptions thereof in this section are omitted.

The descriptions regarding preferred groups for R¹² may be the same as those for the preferred groups of the above-mentioned bonding functional group "c", and hence descriptions thereof in this section are omitted.

The descriptions regarding preferred groups for X¹¹ may be the same as those for the preferred groups of the above-mentioned tertiary amine structural group, and hence descriptions thereof in this section are omitted.

A preferred range of "d" may be the same as the preferred range of "c" in the general formula (100).

The molecular weight of the compound C is preferably 50 or more and 2,000 or less, more preferably 100 or more and 1,000 or less, still more preferably 150 or more and 500 or less, particularly preferably 200 or more and 300 or less. This is because the synthesis of the compound A is facilitated.

As such compound C, examples of a compound in which "d" represents 1 include: aliphatic compounds, such as 1-methyl-4-piperidinol (CAS Registry Number: 106-52-5), 1-methyl-3-pyrrolidinol (CAS Registry Number: 13220-33-2), 4-(hydroxymethyl)-1-methylpiperidine (CAS Registry Number: 20691-89-8), 1-ethyl-3-pyrrolidinol (CAS Registry Number: 30727-14-1), 4-(dimethylamino)-1-butanol (CAS Registry Number: 13330-96-6), 3-dimethylamino-1-propanol (CAS Registry Number: 3179-63-3), 2-dimethylaminoethanol (CAS Registry Number: 108-01-0), 5-(dipropylamino)-1-pentanol (CAS Registry Number: 39984-57-1), 2-(2-dimethylaminoethoxy)ethanol (CAS Registry Number: 1704-62-7), 3-diethylamino-1-propanol (CAS Registry Number: 622-93-5), 1-dimethylamino-2-propanol (CAS Registry Number: 108-16-7), 3-(dimethylamino)-1-butanol (CAS Registry Number: 2893-65-4), 2-dimethylamino-2-methyl-1-propanol (CAS Registry Number: 7005-47-2), 2-[butyl(methyl)amino]ethanol (CAS Registry Number: 2893-48-3), 2-(dibutylamino)ethanol (CAS Registry Number: 102-81-8), 4-(diethylamino)-2-butyn-1-ol (CAS Registry Number: 10575-25-4), (CAS Registry Number), 2-[ethyl(methyl)amino]-1-propanol (CAS Registry Number: 1060817-16-4), (CAS Registry Number), tropine (CAS Registry Number: 120-29-6), (1-ethylpyrrolidin-3-yl)methanol (CAS Registry Number: 61472-22-8), pseudotropine (CAS Registry Number: 135-97-7), (1-isopropylpiperidin-4-yl)methanol (CAS Registry Number: 280774-03-0), (1-isopropylpyrrolidin-3-yl)methanol (CAS Registry Number: 2148-53-0), 3-quinuclidinol (CAS Registry Number: 1619-34-7), 2-diethylaminoethanol (CAS Registry Number: 100-37-8), 1-diethylamino-2-propanol (CAS Registry Number: 4402-32-8), 2-(diisopropylamino)ethanol (CAS Registry Number: 96-80-0), 5-diethylamino-1-pentanol (CAS Registry Number: 2683-57-0), 3-(dimethylamino)-2,2-dimethyl-1-propanol (CAS Registry Number: 19059-68-8), 1-methyl-3-piperidinol (CAS Registry Number: 3554-74-3), 1-ethyl-3-piperidinol (CAS Registry Number: 13444-24-1), 1-methyl-2-piperidinemethanol (CAS Registry Number: 20845-34-5), 1-methyl-3-piperidinemethanol (CAS Registry Number: 7583-53-1), 1-methyl-2-piperidineethanol (CAS Registry Number: 533-15-3), [1-(2-methoxyethyl)piperidin-3-yl]methanol (CAS Registry Number: 915921-51-6), and 6-dimethylamino-1-hexanol (CAS Registry Number: 1862-07-3); and aromatic compounds, such as [(dimethylamino)methyl]phenol (CAS Registry Number: 25338-55-0), hordenine (CAS Registry Number: 539-15-1), 2-[(dimethylamino)methyl]phenol (CAS Registry Number: 120-65-0), 2,6-di-tert-butyl-4-(dimethylaminomethyl)phenol (CAS Registry Number: 88-27-7), 2-(benzylmethylamino)ethanol (CAS Registry Number: 101-98-4), 3-[1-(dimethylamino)ethyl]phenol (CAS Registry Number: 105601-04-5), 3-diethylaminophenol (CAS Registry Number: 91-68-9), 1-benzyl-3-piperidinol (CAS Registry Number: 14813-01-5), 1-benzyl-4-piperidinol (CAS Registry Number: 4727-72-4), and 1-benzyl-3-pyrrolidinol (CAS Registry Number: 775-15-5).

As the above-mentioned compound C, examples of a compound in which "d" represents 2 include aliphatic compounds, such as 2-(4-methylpiperazin-1-yl)cyclopentanol (CAS Registry Number: 915921-53-8), 1,3-bis(dimethylamino)-2-propanol (CAS Registry Number: 5966-51-8), and 1,4-diazabicyclo[2.2.2]octan-2-ylmethanol (CAS Registry Number).

As the above-mentioned compound C, examples of a compound in which "d" represents 3 include aromatic compounds such as 2,4,6-tris(dimethylaminomethyl)phenol (CAS Registry Number: 90-72-2).

An aliphatic compound, such as 2-[[2-(dimethylamino)ethyl]methylamino]ethanol (CAS Registry Number: 2212-32-0), 4-methylpiperazine-1-ethanol (CAS Registry Number: 5464-12-0), or 1-bis[3-(dimethylamino)propyl]amino-2-propanol (CAS Registry Number: 67151-63-7) may also be used as the above-mentioned compound C.

### (3) Structural Unit B

The compound A may have a structural unit except the structural unit A (hereinafter sometimes referred to as "structural unit B").

When the structure of the repeating site of the structural unit A is a structure derived from an ethylenically unsaturated compound, examples of a compound for forming the structural unit B (hereinafter sometimes referred to as "compound B") include the above-mentioned hydroxy group-containing ethylenically unsaturated compound, carboxyl group-containing ethylenically unsaturated compound, epoxy group-containing ethylenically unsaturated compound, and amino group-containing ethylenically unsaturated compound.

In this disclosure, for example, an aromatic unsaturated compound, an aliphatic ethylenically unsaturated compound, a vinyl ether, a fatty acid vinyl, or an N-substituted maleimide may also be used as the compound B.

In this disclosure, the compound A preferably has, as the structural unit B, a structural unit derived from at least one compound selected from the group consisting of: a hydroxy group-containing ethylenically unsaturated compound, a carboxyl group-containing ethylenically unsaturated compound; an aliphatic ethylenically unsaturated compound; and an aromatic unsaturated compound, more preferably has a structural unit derived from at least one compound selected from the group consisting of: a hydroxy group-containing ethylenically unsaturated compound, a carboxyl group-containing ethylenically unsaturated compound, and an aromatic unsaturated compound, still more preferably has a structural unit derived from at least one compound selected from the group consisting of: a carboxyl group-containing ethylenically unsaturated compound; and an aromatic unsaturated compound, and particularly preferably has at least a structural unit derived from an aromatic unsaturated compound. This is because it becomes easier for the above-mentioned curing agent material to form a curing agent more excellent in low-temperature curability and storage stability.

Examples of the above-mentioned aromatic unsaturated compound include a styrene and an aromatic acrylate.

In this disclosure, the above-mentioned aromatic unsaturated compound preferably contains a styrene. This is because it becomes easier for the above-mentioned curing agent material to form a curing agent more excellent in low-temperature curability and storage stability.

Examples of the above-mentioned styrene include styrene, α-methylstyrene, p-hydroxystyrene, chloromethylstyrene, vinyltoluene, and indene.

In this disclosure, the above-mentioned styrene preferably includes styrene or α-methylstyrene, and more preferably includes styrene. This is because it becomes easier for the above-mentioned curing agent material to form a curing agent more excellent in low-temperature curability and storage stability.

Examples of the above-mentioned aromatic acrylate include n-propylphenyl (meth)acrylate, benzyl (meth)acrylate, phenoxyethyl (meth)acrylate, phenoxydiethylene glycol (meth)acrylate, and rosin acrylate.

The term "(meth)acrylate" as used herein represents any one of "acrylate" and "methacrylate".

Examples of the above-mentioned aliphatic ethylenically unsaturated compound include: aliphatic acrylates, such as methyl (meth)acrylate, ethyl (meth)acrylate, isopropyl (meth)acrylate, n-butyl (meth)acrylate, isobutyl (meth)acrylate, t-butyl (meth)acrylate, 2-ethylhexyl (meth)acrylate, cyclohexyl (meth)acrylate, 2,2,4-trimethylcyclohexyl (meth)acrylate, 4-t-butylcyclohexyl (meth)acrylate, stearyl (meth)acrylate, lauryl (meth)acrylate, isobornyl (meth)acrylate, adamantyl (meth)acrylate, dicyclopentenyl (meth)acrylate, dicyclopentenyloxyethyl (meth)acrylate, tricyclo-(5,2,1,0,2.6)-decanyl (meth)acrylate, and tricyclo-(5,2,1,0,2.6)-decanyloxyethyl (meth)acrylate; and α-olefins each having 2 or more and 20 or less carbon atoms, such as propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene.

Examples of the above-mentioned vinyl ether include ethyl vinyl ether, n-propyl vinyl ether, isopropyl vinyl ether, n-butyl vinyl ether, and isobutyl vinyl ether.

Examples of the above-mentioned fatty acid vinyl include vinyl acetate and vinyl propionate.

Examples of the above-mentioned N-substituted maleimide include N-methylmaleimide, N-ethylmaleimide, N-cyclohexylmaleimide, and N-phenylmaleimide.

The content of the structural unit B is preferably 10 parts by mass or more and 90 parts by mass or less, more preferably 30 parts by mass or more and 70 parts by mass or less, still more preferably 35 parts by mass or more and 60 parts by mass or less, particularly preferably 40 parts by mass or more and 50 parts by mass or less, most preferably 40 parts by mass or more and 48 parts by mass or less in 100 parts by mass of the compound A. This is because it becomes easier for the above-mentioned curing agent material to form a curing agent more excellent in low-temperature curability and storage stability.

The content of the structural unit B is preferably 1 mol or more and 99 mol or less, more preferably 40 mol or more and 95 mol or less, still more preferably 50 mol or more and 90 mol or less, particularly preferably 60 mol or more and 85 mol or less, most preferably 70 mol or more and 80 mol or less in 100 mol of all the structural units in the above-mentioned compound A. This is because it becomes easier for the above-mentioned curing agent material to form a curing agent more excellent in low-temperature curability and storage stability.

The content of the structural unit derived from an aromatic unsaturated compound in the structural unit B is preferably 50 parts by mass or more, more preferably 80 parts by mass or more, still more preferably 90 parts by mass or more, particularly preferably 95 parts by mass or more, most preferably 98 parts by mass or more in 100 parts by mass of the structural unit B. This is because it becomes easier for the above-mentioned curing agent material to form a curing agent more excellent in low-temperature curability and storage stability.

The content of the structural unit derived from a carboxyl group-containing ethylenically unsaturated compound in the structural unit B is preferably 15 parts by mass or less, more preferably 10 parts by mass or less, still more preferably 5 parts by mass or less, particularly preferably 3 parts by mass or less in 100 parts by mass of the structural unit B. This is because it becomes easier for the above-mentioned curing agent material to form a curing agent more excellent in low-temperature curability and storage stability.

### (4) Compound A

The amine value of the compound A may be any value as long as desired low-temperature curability and storage stability are obtained, and the amine value is preferably 100 mgKOH/g or more and 500 mgKOH/g or less, more preferably 120 mgKOH/g or more and 300 mgKOH/g or less, still more preferably 150 mgKOH/g or more and 250 mgKOH/g or less, particularly preferably 170 mgKOH/g or more and 230 mgKOH/g or less.

The amine value indicates the number of milligrams of KOH equivalent to the amount of HCl required to neutralize 1 g of a sample. As a method of measuring such amine value, the amine value may be measured on the basis of a known measuring method, for example, JIS K7237-1995.

### 2. Application

As an application of the above-mentioned curing agent material, the above-mentioned curing agent material may be used alone as a curing agent, and is preferably for use in combination with an anionic curing agent. This is because the following effect can be more effectively exhibited: it becomes easier for the above-mentioned curing agent material to form a curing agent having excellent low-temperature curability and storage stability.

Here, the descriptions regarding the anionic curing agent may be the same as those described in the section "B. Curing Agent" to be described later, and hence descriptions thereof in this section are omitted.

When the above-mentioned curing agent material is for use in combination with the anionic curing agent, the descriptions regarding, for example, the content of the anionic curing agent in 100 parts by mass of the total of the anionic curing agent and the compound A may also be the same as those described in the section "B. Curing Agent" to be described later, and hence descriptions thereof in this section are omitted.

Any method may be adopted as a method of using the above-mentioned curing agent material as long as desired curability can be exhibited, and the method may be a method including using the curing agent material as a thermosetting agent that exhibits curability by heating, or a method including using the curing agent material as a photocurable agent that exhibits curability by energy ray irradiation.

In this disclosure, a method including using the above-mentioned curing agent material as a thermosetting agent is preferred. This is because the following effect can be more effectively exhibited: the above-mentioned curing agent material can form a curing agent having excellent low-temperature curability and storage stability.

Examples of the application of a curable composition using the above-mentioned curing agent material include a semiconductor sealing material, a laminate for a printed wiring board, an electronic component adhesive, an electronic component sealing material, a casting material, varnish, a paint, a structural adhesive, and a fiber-reinforced composite material.

In this disclosure, the above-mentioned application is preferably an adhesive, more preferably an electronic component adhesive or a structural adhesive, still more preferably a structural adhesive.

In addition, the structural adhesive is preferably a structural adhesive to be used for joining a metal member or the like in a wide range of fields, such as an automobile, a ship, aviation, space, civil engineering, and a construction field, more preferably a structural adhesive for an automobile.

### B. Curing Agent

Next, the curing agent of this disclosure is described.

The curing agent of this disclosure includes: a compound having a structural unit having a tertiary amine structural group and having a weight-average molecular weight of 5,000 or more and 30,000 or less; and an anionic curing agent.

The curing agent of this disclosure is excellent in low-temperature curability and storage stability.

The curing agent of this disclosure includes the compound A and the anionic curing agent.

Each component of the curing agent of this disclosure is described in detail below.

### 1. Compound A

The descriptions regarding the compound A to be used in this disclosure may be the same as those described in the section "A. Curing Agent Material" described above, and hence descriptions thereof in this section are omitted.

The content of the compound A is preferably 5 parts by mass or more and 90 parts by mass or less, more preferably 10 parts by mass or more and 70 parts by mass or less, still more preferably 15 parts by mass or more and 50 parts by mass or less, particularly preferably 20 parts by mass or more and 40 parts by mass or less, most preferably 25 parts by mass or more and 35 parts by mass or less in 100 parts by mass of the above-mentioned curing agent. This is because the above-mentioned curing agent is more excellent in low-temperature curability and storage stability.

### 2. Anionic Curing Agent

The above-mentioned anionic curing agent may be any agent to be used for anionic curing.

An agent except the compound A may be used as such anionic curing agent, and examples thereof include an acid anhydride-based curing agent, a phenol-based curing agent, an amine-based curing agent, and a polythiol-based curing agent.

In this disclosure, the above-mentioned anionic curing agent preferably contains an amine-based curing agent. This is because the above-mentioned curing agent is more excellent in low-temperature curability and storage stability.

For example, those described as curing agents in WO 2022/168665 A1 may each be used as such anionic curing agent.

Examples of the above-mentioned amine-based curing agent include an amine and a modified amine obtained by modifying an amine.

In addition, the above-mentioned amine-based curing agent may be any agent containing at least one of the above-mentioned amine or modified amine, but a phenol mixture containing at least one of the above-mentioned amine or modified amine, and a phenol resin may also be used.

That is, in this disclosure, an amine, a modified amine, or a phenol mixture may be used as the above-mentioned amine-based curing agent.

In this disclosure, the amine-based curing agent preferably contains an amine. This is because the above-mentioned curing agent is more excellent in low-temperature curability and storage stability.

Examples of a method of modifying an amine include dehydration condensation with a carboxylic acid, an addition reaction with an epoxy resin, an addition reaction with an isocyanate, a Michael addition reaction, a Mannich reaction, a condensation reaction with urea, and a condensation reaction with a ketone.

### (1) Amine

Examples of the above-mentioned amine include an aliphatic polyamine, an aromatic polyamine, a guanamine, a tertiary amine, melamine, a urea, and a urea structure amine compound.

In this disclosure, the above-mentioned amine preferably contains a guanamine or a tertiary amine, and more preferably contains a guanamine. This is because the above-mentioned curing agent is more excellent in low-temperature curability and storage stability. In particular, this is because the guanamine has a high curing temperature when used alone as a curing agent, and the effect of low-temperature curability by its combined use with the above-mentioned curing agent material is high.

Examples of the above-mentioned guanamine include dicyandiamide, benzoguanamine, and acetoguanamine.

In this disclosure, the above-mentioned guanamine preferably contains dicyandiamide. This is because the above-mentioned curing agent is more excellent in low-temperature curability and storage stability.

Examples of a commercially available product of the guanamine include: Omicure DDA-5 manufactured by PTI Japan Corporation; DICY7, DICY15, and DICY50 manufactured by Mitsubishi Chemical Corporation; and Adeka Hardener EH-3636AS and Adeka Hardener EH-4351S manufactured by ADEKA Corporation.

A tertiary amine containing a tertiary amine structural group except the compound A may be used as the above-mentioned tertiary amine.

The above-mentioned tertiary amine preferably has only a tertiary amine structural group as an amino group. This is because the above-mentioned curing agent is more excellent in low-temperature curability and storage stability.

The molecular weight of the above-mentioned tertiary amine is preferably 50 or more and 2,000 or less, more preferably 60 or more and 1,000 or less, still more preferably 70 or more and 500 or less, particularly preferably 80 or more and 300 or less. This is because the above-mentioned curing agent is more excellent in low-temperature curability and storage stability.

The above-mentioned tertiary amine may have at least one of a tertiary amino group or a cyclic tertiary amino group as the tertiary amine structural group, but preferably has the above-mentioned tertiary amino group, and more preferably has a group represented by the general formula (1). This is because the above-mentioned curing agent is more excellent in low-temperature curability and storage stability.

The descriptions regarding the preferred groups for R¹ and R² in the general formula (1) to be used for the above-mentioned tertiary amine may be the same as those described in the section "(2) Structural Unit having Tertiary Amine Structural Group" of the section "A. Curing Agent Material" described above, and hence descriptions thereof in this section are omitted.

The number of nitrogen atoms for forming the tertiary amine structural group of the above-mentioned tertiary amine only needs to be 1 or more, and is preferably 1 or more and 5 or less, more preferably 1 or more and 3 or less, still more preferably 1 or 2. This is because the above-mentioned curing agent is more excellent in low-temperature curability and storage stability.

A compound having a tertiary amino group may be, for example, a compound free of a cyclic tertiary amino group, and examples thereof include N,N-dimethylaminoethylamine, N,N-diethylaminoethylamine, N,N-diisopropylaminoethylamine, N,N-diallylaminoethylamine, N,N-benzylmethylaminoethylamine, N,N-dibenzylaminoethylamine, N,N-cyclohexylmethylaminoethylamine, N,N-dicyclohexylaminoethylamine, N,N-dimethylaminopropylamine, N,N-diethylaminopropylamine, N,N-diisopropylaminopropylamine, N,N-diallylaminopropylamine, N,N-benzylmethylaminopropylamine, N,N-dibenzylaminopropylamine, N,N-cyclohexylmethylaminopropylamine, N,N-dicyclohexylaminopropylamine, N,N-dimethylisophoronediamine, N,N-dimethylbisaminocyclohexane, N,N,N'-trimethylethylenediamine, N'-ethyl-N,N-dimethylethylenediamine, N,N,N'-trimethylethylenediamine, N'-ethyl-N,N-dimethylpropanediamine, N'-ethyl-N,N-dibenzylaminopropylamine, N,N-(bisaminopropyl)-N-methylamine, N,N-bisaminopropylethylamine, N,N-bisaminopropylpropylamine, N,N-bisaminopropylbutylamine, N,N-bisaminopropylpentylamine, N,N-bisaminopropylhexylamine, N,N-bisaminopropyl-2-ethylhexylamine, N,N-bisaminopropylcyclohexylamine, N,N-bisaminopropylbenzylamine, N,N-bisaminopropylallylamine, bis[3-(N,N-dimethylaminopropyl)]amine, bis[3-(N,N-diethylaminopropyl)]amine, bis[3-(N,N-diisopropylaminopropyl)]amine, bis[3-(N,N-dibutylaminopropyl)]amine, 4-(N,N-dimethylamino)benzylamine, 4-(N,N-diethylamino)benzylamine, and 4-(N,N-diisopropylamino)benzylamine.

In addition, the compound C given in the section "A. Curing Agent Material" described above may also be used as the compound having a tertiary amino group.

In this disclosure, the above-mentioned compound having a tertiary amino group is preferably the compound C. This is because a curing agent having excellent low-temperature curability and storage stability is obtained, and in particular, a curing agent having excellent low-temperature curability is easily obtained.

The descriptions regarding the preferred structure and the like of the compound C may be the same as those described in the section "A. Curing Agent Material" described above, and hence descriptions thereof in this section are omitted.

A compound having a cyclic tertiary amino group is, for example, an imidazole compound having an imidazole ring.

A compound having a cyclic tertiary amino group and free of an imidazole ring is, for example, a compound having an N-substituted morpholine ring, an N-substituted piperidine ring, an N-substituted piperazine ring, or an N,N-substituted piperazine ring (sometimes referred to as "other compound having a cyclic tertiary amino group").

Examples of the above-mentioned imidazole compound include an aliphatic imidazole compound and an aromatic imidazole compound.

The above-mentioned aliphatic imidazole compound may be a compound free of a heterocyclic ring except the imidazole ring or an aromatic hydrocarbon ring, and examples thereof include 2-methylimidazole, 2-undecylimidazole, 2-heptadecylimidazole, 1,2-dimethylimidazole, 2-ethyl-4-methylimidazole, and 1,2-dimethylimidazole.

The above-mentioned aromatic imidazole compound may be a compound having an aromatic hydrocarbon ring and free of a heterocyclic ring except the imidazole ring, and examples thereof include 2-phenylimidazole, 2-phenyl-4-methylimidazole, 1-benzyl-2-methylimidazole, and 1-benzyl-2-phenylimidazole.

For example, a compound in which a hydrogen atom in the above-mentioned aliphatic imidazole compound or aromatic imidazole compound is substituted with a substituent may also be used as the above-mentioned imidazole compound in addition to the above-mentioned aliphatic imidazole compound and aromatic imidazole compound, and for example, a cyano group-containing imidazole compound, such as 1-cyanoethyl-2-methylimidazole, 1-cyanoethyl-2-undecylimidazole, 1-cyanoethyl-2-ethyl-4-methylimidazole, 1-cyanoethyl-2-phenylimidazole, 1-cyanoethyl-2-undecylimidazolium trimellitate, or 1-cyanoethyl-2-phenylimidazolium trimellitate, a triazine ring-containing imidazole compound, such as 2,4-diamino-6-[2'-methylimidazolyl-(1')]-ethyl-s-triazine or 2,4-diamino-6-[2'-undecylimidazolyl-(1')]-ethyl-s-triazine, 2,4-diamino-6-[2'-ethyl-4'-methylimidazolyl-(1')]-ethyl-s-triazine, a 2,4-diamino-6-[2'-methylimidazolyl-(1')]-ethyl-s-triazine isocyanuric acid adduct, a 2-phenylimidazole isocyanuric acid adduct, 2-phenyl-4,5-dihydroxymethylimidazole, 2-phenyl-4-methyl-5-hydroxymethylimidazole, 2,3-dihydro-1H-pyrrolo[1,2-a]benzimidazole, 1-dodecyl-2-methyl-3-benzylimidazolium chloride, 2-methylimidazoline, or 2-phenylimidazoline may also be used.

Examples of the above-mentioned other compound having a cyclic tertiary amino group include N-(2-aminoethyl)pyrrolidine, N-(2-aminoethyl)piperidine, N-(2-aminoethyl)morpholine, N-(2-aminoethyl)piperazine, N-(2-aminoethyl)-N'-methylpiperazine, N-(3-aminopropyl)pyrrolidine, N-(3-aminopropyl)piperidine, N-(3-aminopropyl)morpholine, N-(3-aminopropyl)piperazine, and N-(3-aminopropyl)-N'-methylpiperidine.

A polyamine free of an aromatic hydrocarbon ring or an imidazole ring may be used as the above-mentioned aliphatic polyamine, and examples thereof include a chain polyamine and an alicyclic polyamine.

The above-mentioned chain polyamine may be a compound free of a tertiary amine structural group and free of an aliphatic hydrocarbon ring, and examples thereof include an alkylenediamine and a polyalkyleneamine.

The above-mentioned alkylenediamine may be a compound in which two amino groups are bonded to an alkylene group, and examples thereof include ethylenediamine, 1,2-diaminopropane, 1,3-diaminopropane, 1,3-diaminobutane, 1,4-diaminobutane, and hexamethylenediamine.

The above-mentioned polyalkyleneamine may be a compound free of a tertiary amine structural group, having two or more amino groups, and having two or more ethylene groups (-CH₂CH₂-) bonding nitrogen atoms, and examples thereof include: chain ethyleneamines, such as diethylenetriamine, triethylenetetramine, and tetraethylenepentamine; and piperazine.

The above-mentioned alicyclic polyamine may be a compound free of a tertiary amine structural group, and having two or more amino groups and an aliphatic hydrocarbon ring, and examples thereof include 1,4-diaminocyclohexane, 1,3-diaminocyclohexane, 1,3-diaminomethylcyclohexane, 1,2-diaminocyclohexane, 1,4-diamino-3,6-diethylcyclohexane, 4,4'-diaminodicyclohexylmethane, 1,3-bis(aminomethyl)cyclohexane, 1,4-bis(aminomethyl)cyclohexane, 4,4'-diaminodicyclohexylpropane, bis(4-aminocyclohexyl)sulfone, 4,4'-diaminodicyclohexyl ether, 2,2'-dimethyl-4,4'-diaminodicyclohexylmethane, isophoronediamine, and norbornenediamine.

The above-mentioned aromatic polyamine may be a compound free of a tertiary amine structural group, and having two or more amino groups and an aromatic hydrocarbon ring, and examples thereof include m-xylylenediamine, diaminodiphenylmethane, diaminodiphenyl sulfone, diethyltoluenediamine, 1-methyl-3,5-diethyl-2,4-diaminobenzene, 1-methyl-3,5-diethyl-2,6-diaminobenzene, 1,3,5-triethyl-2,6-diaminobenzene, 3,3'-diethyl-4,4'-diaminodiphenylmethane, and 3,5,3',5'-tetramethyl-4,4'-diaminodiphenylmethane.

The above-mentioned urea may be a urea having a terminal urea group represented by the following general formula (3), and for example, a compound represented by the following general formula (31) may be used.

A compound having a terminal urea group corresponds not to a tertiary amine but to a urea even when the compound has a tertiary amino group. Similarly, a compound having a terminal urea group corresponds not to an aliphatic polyamine or an aromatic polyamine but to a urea even when the compound has a primary amino group and a secondary amino group.

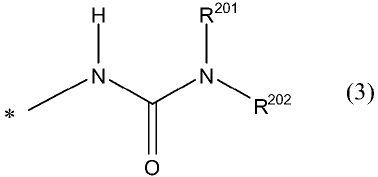

In the formula (3), R²⁰¹ and R²⁰² each independently represent a hydrogen atom, a substituted or unsubstituted hydrocarbon group having 1 to 20 carbon atoms, or a group in which a methylene group in the hydrocarbon group is substituted with a divalent group selected from Group A below, * represents a bonding site, Group A represents -O-, -CO-, -CO-O-, -O-CO-, -NR¹¹-, -NR¹¹CO-, and -S-, and R¹¹ represents a hydrogen atom or a hydrocarbon group having 1 to 10 carbon atoms.

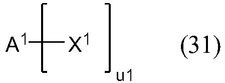

In the formula (31), A¹ represents a u1-valent organic group having 1 to 20 carbon atoms, X¹ represents a group represented by the general formula (3), and u1 represents an integer of 1 or more and 4 or less, and when u1 represents 2 or more, a plurality of X¹'s may be identical to or different from each other.

Examples of the hydrocarbon group having 1 to 20 carbon atoms used for each of R²⁰¹ and R²⁰², and the substituent for substituting a hydrogen atom in the hydrocarbon group include those described as the hydrocarbon group and the substituent used for the above-mentioned R¹.

In this disclosure, the above-mentioned R²⁰¹ and R²⁰² each independently represent preferably a substituted or unsubstituted hydrocarbon group having 1 to 20 carbon atoms, more preferably a substituted or unsubstituted hydrocarbon group having 1 to 10 carbon atoms, still more preferably a substituted or unsubstituted hydrocarbon group having 1 to 5 carbon atoms, particularly preferably a substituted or unsubstituted hydrocarbon group having 1 to 3 carbon atoms, most preferably a substituted or unsubstituted hydrocarbon group having 1 or 2 carbon atoms. This is because the above-mentioned curing agent is more excellent in low-temperature curability and storage stability.

In this disclosure, the above-mentioned R²⁰¹ and R²⁰² each independently represent preferably an unsubstituted hydrocarbon group.

The hydrocarbon group used for each of the above-mentioned R²⁰¹ and R²⁰² is preferably an aliphatic hydrocarbon group, more preferably a chain aliphatic hydrocarbon group, still more preferably an alkyl group. This is because the above-mentioned curing agent is more excellent in low-temperature curability and storage stability.

In this disclosure, the above-mentioned R²⁰¹ and R²⁰² each independently represent preferably an alkyl group having 1 to 10 carbon atoms, more preferably an alkyl group having 1 to 5 carbon atoms, still more preferably an alkyl group having 1 to 3 carbon atoms, particularly preferably a methyl group or an ethyl group. This is because the above-mentioned curing agent is more excellent in low-temperature curability and storage stability.

A¹ represents a u1-valent organic group having 1 to 20 carbon atoms, and for example, a substituted or unsubstituted hydrocarbon group having 1 to 20 carbon atoms may be used.

A group obtained by removing u1-1 hydrogen atoms from each of the groups exemplified as the group used for the above-mentioned R¹ may be used as such group.

When u1 represents 3, A¹ represents a trivalent organic group, and for example, each of groups having structures represented by the general formulae (4) to (6) described in JP 6650151 B2 may also be used as such group.

When u1 represents 4, A¹ represents a tetravalent organic group, and for example, a group having a structure represented by the general formula (7) described in JP 6650151 B2 may also be used as such group.

The organic group to be used as A¹ is preferably a substituted or unsubstituted hydrocarbon group having 1 to 20 carbon atoms, more preferably an unsubstituted hydrocarbon group having 6 to 15 carbon atoms, still more preferably an unsubstituted hydrocarbon group having 6 to 10 carbon atoms, particularly preferably an unsubstituted hydrocarbon group having 6 to 8 carbon atoms. This is because the above-mentioned curing agent is more excellent in low-temperature curability and storage stability.

The hydrocarbon group used for the above-mentioned A¹ is preferably an aromatic hydrocarbon ring-containing group, more preferably a group obtained by removing u1-1 hydrogen atoms in an aromatic ring in an aryl group, and it is still more preferred that the hydrocarbon group have a monocyclic structure. This is because the above-mentioned curing agent is more excellent in low-temperature curability and storage stability.

u1 only needs to represent 1 or more and 4 or less, and represents preferably 1 or more and 3 or less, more preferably 1 or 2, still more preferably 2. This is because the above-mentioned curing agent is more excellent in low-temperature curability and storage stability.

A urea free of a tertiary amine structural group may be used as the above-mentioned urea, and examples thereof include 3,3'-(4-methyl-1,3-phenylene)bis(1,1-dimethylurea), 2,4-toluenebisdimethylurea, 4,4-methylenediphenylenebis(N,N-dimethylurea), 1,1-dimethyl-3-(4-chlorophenyl)urea, 1,1-dimethyl-3-(3,4-chlorophenyl)urea, isophoronebisdimethylurea, 1,1-dimethyl-3-phenylurea, 1,1-dimethyl-3-(4-ethoxyphenyl)urea, 1,1-(4-phenylene)-bis(3,3-dimethyl)urea, 1,1-dimethyl-3-(4-ethoxyphenyl)urea, 1,1-dimethyl-3-(2-hydroxyphenyl)urea, 1,1-dimethyl-3-(3-chloro-4-methylphenyl)urea, N-phenylurea, N,N-dimethylurea, fluometuron, p-chlorophenyl-N,N-dimethylurea, 3,4-dichlorophenyl-N,N-dimethylurea, N-methylurea, N,N,N'-trimethylurea, and N,N,N',N'-tetramethylurea.

Examples of a commercially available product of the above-mentioned urea include: Dyhard UR200, UR300, UR400, UR500, UR600, and UR700 manufactured by AlzChem Group AG; U 52M manufactured by Omicure; and Monuron, Fenuron, Diuron, and Chlortoluron.

The urea structure amine compound is a compound, which has a urea structure (-NH-C(=O)-NH-) and an amino group (primary amino group, secondary amino group, or tertiary amino group), and which is free of the above-mentioned terminal urea group.

A compound having a urea structure corresponds not to a tertiary amine but to a urea structure-containing amine compound even when the compound has a tertiary amino group.

Similarly, a compound having a urea structure corresponds not to an aliphatic polyamine or an aromatic polyamine but to a urea structure-containing amine compound even when the compound has a primary amino group and a secondary amino group.

Such urea structure amine compound may be a compound having a group represented by the following general formula (4), and for example, a compound represented by the following general formula (41) may be used: 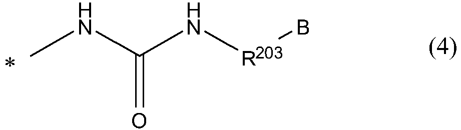 in the formula (4), B represents an amino group, R²⁰³ represents a substituted or unsubstituted divalent hydrocarbon group having 1 to 20 carbon atoms, or a group in which a methylene group in the hydrocarbon group is substituted with a divalent group selected from Group A below, * represents a bonding site, Group A represents -O-, -CO-, -CO-O-, -O-CO-, -NR¹¹-, -NR¹¹CO-, and -S-, and R¹¹ represents a hydrogen atom or a hydrocarbon group having 1 to 10 carbon atoms.

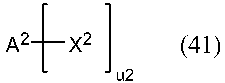

In the formula (41), A² represents a u2-valent organic group having 1 to 20 carbon atoms, X² represents a group represented by the general formula (4), and u2 represents an integer of 1 or more and 4 or less, and when u2 represents 2 or more, a plurality of X₂'s may be identical to or different from each other.

Examples of the divalent hydrocarbon group having 1 to 20 carbon atoms used for R²⁰³ include groups each obtained by removing one hydrogen atom from each of the hydrocarbon groups described as the hydrocarbon group used for the above-mentioned R¹.

In this disclosure, the above-mentioned R²⁰³ each independently represent preferably a substituted or unsubstituted divalent hydrocarbon group having 1 to 20 carbon atoms, more preferably a substituted or unsubstituted divalent hydrocarbon group having 1 to 10 carbon atoms, still more preferably a substituted or unsubstituted divalent hydrocarbon group having 1 to 6 carbon atoms, particularly preferably a substituted or unsubstituted divalent hydrocarbon group having 2 to 4 carbon atoms. This is because the above-mentioned curing agent is more excellent in low-temperature curability and storage stability.

In this disclosure, the above-mentioned R²⁰³ preferably represents an unsubstituted hydrocarbon group.

The divalent hydrocarbon group used for the above-mentioned R²⁰³ is preferably a divalent aliphatic hydrocarbon group, more preferably a divalent chain aliphatic hydrocarbon group, still more preferably an alkylene group. This is because the above-mentioned curing agent is more excellent in low-temperature curability and storage stability.

In this disclosure, the above-mentioned R²⁰³ each independently represent preferably an alkylene group having 1 to 10 carbon atoms, more preferably an alkylene group having 1 to 6 carbon atoms, still more preferably an alkylene group having 2 to 4 carbon atoms, particularly preferably a n-propylene group or an isopropylene group. This is because the above-mentioned curing agent is more excellent in low-temperature curability and storage stability.

Any one of a primary amino group, a secondary amino group, and a tertiary amino group may be used as the amino group used for B.

In this disclosure, the above-mentioned B preferably represents a primary amino group (-NH₂) or a tertiary amino group.

Examples of the above-mentioned tertiary amino group include the groups exemplified as the group represented by the general formula (1).

The descriptions regarding a preferred structure of the tertiary amino group used for the above-mentioned B may also be the same as that described as the preferred structure of the group represented by the general formula (1).

The above-mentioned A² represents a u2-valent organic group having 1 to 20 carbon atoms, and for example, a substituted or unsubstituted hydrocarbon group having 1 to 20 carbon atoms may be used.

Such group may be the same as the groups exemplified as the group that may be used as the above-mentioned A¹.

The hydrocarbon group used for the above-mentioned A² is preferably a hydrocarbon group having 1 to 20 carbon atoms, more preferably a hydrocarbon group having 2 to 15 carbon atoms, still more preferably a hydrocarbon group having 5 to 12 carbon atoms, particularly preferably a hydrocarbon group having 6 to 10 carbon atoms. This is because the above-mentioned curing agent is more excellent in low-temperature curability and storage stability.

In this disclosure, the above-mentioned A² preferably represents an unsubstituted hydrocarbon group. This is because the above-mentioned curing agent is more excellent in low-temperature curability and storage stability.

The hydrocarbon group used for the above-mentioned A² is preferably an aliphatic hydrocarbon group, more preferably an aliphatic ring-containing group, still more preferably a group obtained by removing u2-1 hydrogen atoms from an aliphatic hydrocarbon ring in a cycloalkylalkyl group. This is because the above-mentioned curing agent is more excellent in low-temperature curability and storage stability.

In this disclosure, when u2 represents 2, the above-mentioned A² represents preferably a group obtained by removing one hydrogen atom from an aliphatic hydrocarbon ring in a cycloalkylalkyl group having 1 to 20 carbon atoms, more preferably a group obtained by removing one hydrogen atom from an aliphatic hydrocarbon ring in a cycloalkylalkyl group having 2 to 15 carbon atoms, still more preferably a group obtained by removing one hydrogen atom from an aliphatic hydrocarbon ring in a cycloalkylalkyl group having 5 to 12 carbon atoms, particularly preferably a group obtained by removing one hydrogen atom from an aliphatic hydrocarbon ring in a cycloalkylalkyl group having 6 to 10 carbon atoms. This is because the above-mentioned curing agent is more excellent in low-temperature curability and storage stability.

u2 only needs to represent 1 or more and 4 or less, and represents preferably 1 or more and 3 or less, more preferably 1 or 2, still more preferably 2. This is because the above-mentioned curing agent is more excellent in low-temperature curability and storage stability.

The above-mentioned X² represents a group represented by the general formula (4), and when u2 represents 2 or more, a plurality of X²'s to be incorporated may all be the same, or may be different groups, but are preferably different groups.

In this disclosure, when u2 represents 2 or more, it is preferred that B represent a primary amino group in one of the plurality of X²'s to be incorporated, that is, the above-mentioned urea structure amine compound be a compound having a primary amino group, and it is preferred that B represent a tertiary amino group in one of the plurality of X²'s to be incorporated, that is, the above-mentioned urea structure amine compound be a compound having both of a primary amino group and a tertiary amino group. This is because the above-mentioned curing agent is more excellent in low-temperature curability and storage stability.

Specifically, when u2 represents 2, it is preferred that B represent a primary amino group in one X², and B represent a tertiary amino group in the other X². This is because the above-mentioned curing agent is more excellent in low-temperature curability and storage stability.

A method of synthesizing the urea structure amine compound is not particularly limited, but for example, the urea structure amine compound may be obtained by reacting a compound having two or more amino groups with an isocyanate compound.

For example, in the general formula (41), when u2 represents 2, B represents a primary amino group in one X², and B represents a tertiary amino group in the other X², the urea structure amine compound may be obtained by reacting a compound having two primary amino groups, a compound having a primary amino group and a tertiary amino group, and a diisocyanate compound.

The isocyanate compound is not particularly limited as long as the isocyanate compound is a compound having at least one isocyanate group in a molecule thereof, and a monoisocyanate having one isocyanate group in a molecule thereof and a polyisocyanate having two or more isocyanate groups in a molecule thereof may each be used.

As an arbitrary combination, one kind of monoisocyanate may be used alone, two or more kinds of monoisocyanates may be used in combination, one kind of polyisocyanate may be used alone, or two or more kinds of polyisocyanates may be used in combination. In addition, a monoisocyanate and a polyisocyanate may be used in combination.

Examples of the monoisocyanate include ethyl isocyanate, butyl isocyanate, propyl isocyanate, isopropyl isocyanate, tert-butyl isocyanate, dodecyl isocyanate, cyclohexyl isocyanate, octadecyl isocyanate, (R)-(+)-α-methylbenzyl isocyanate, (S)-(-)-α-methylbenzyl isocyanate, (R)-(-)-1-(1-naphthyl)ethyl isocyanate, ethyl isocyanatoacetate, butyl isocyanatoacetate, benzyl isocyanate, 3-isopropenyl-α,α-dimethylbenzyl isocyanate, methyl (S)-(-)-2-isocyanatopropionate, methyl (S)-2-isocyanato-3-phenylpropionate, 2-isocyanatoethyl methacrylate, 3-(triethoxysilyl)propyl isocyanate, and 6,7-methylenedioxy-(4-isocyanatomethylcoumarin).

Specific examples of the polyisocyanate include diisocyanates, such as propane-1,2-diisocyanate, 2,3-dimethylbutane-2,3-diisocyanate, 2-methylpentane-2,4-diisocyanate, octane-3,6-diisocyanate, 3,3-dinitropentane-1,5-diisocyanate, octane-1,6-diisocyanate, 1,6-hexamethylene diisocyanate, trimethylhexamethylene diisocyanate, lysine diisocyanate, tolylene diisocyanate, xylylene diisocyanate, meta-tetramethylxylylene diisocyanate, isophorone diisocyanate, 1,3- or 1,4-bis(isocyanatomethyl)cyclohexane, diphenylmethane-4,4'-diisocyanate, hydrogenated tolylene diisocyanate, and 4,4'-dicyclohexylmethane diisocyanate.

Of the compounds exemplified as the above-mentioned tertiary amine, aliphatic polyamine, aromatic polyamine, and the like, those each having two or more amino groups may each be used as the compound having two or more amino groups. In addition, the compounds each having two or more amino groups may be used in combination thereof. For example, an aliphatic polyamine and a tertiary amine may be used in combination as the compound having two or more amino groups.

### (2) Modified Amine

The modified amine is obtained by modifying the above-mentioned amine.

Of the compounds described in the section "(1) Amine" described above, an amine having at least one of a primary amino group or a secondary amino group may be exemplified as the amine for forming such modified amine.

Examples of the amine to be used for the above-mentioned modified amine include a tertiary amine having at least one of a primary amino group or a secondary amino group, an aliphatic polyamine, an aromatic polyamine, and a urea structure amine compound having at least one of a primary amino group or a secondary amino group.

In this disclosure, the amine is preferably a tertiary amine having at least one of a primary amino group or a secondary amino group, or a urea structure amine compound having at least one of a primary amino group or a secondary amino group, more preferably a urea structure amine compound having at least one of a primary amino group or a secondary amino group. This is because the above-mentioned curing agent is more excellent in low-temperature curability and storage stability.

It is preferred that a modification method to be used for the above-mentioned modified amine be an addition reaction with an epoxy resin, that is, the modified amine be a modified product of an amine with an epoxy resin. This is because the above-mentioned curing agent is more excellent in low-temperature curability and storage stability.

Examples of the epoxy resin to be used for the above-mentioned modified amine include a monoglycidyl ether compound, a monoglycidyl ester compound, a polyglycidyl ether compound of a mononuclear polyhydric phenol compound, a polynuclear polyhydric phenol compound or a polyglycidyl ether compound of an alkylene oxide adduct of the polynuclear polyhydric phenol compound, a polyglycidyl ether of a polyhydric alcohol, a glycidyl ester of an aliphatic, aromatic, or alicyclic polybasic acid, a homopolymer or copolymer of glycidyl methacrylate, an epoxy compound having a glycidylamino group, an epoxidized product of a cyclic olefin compound, an epoxidized conjugated diene polymer, and a heterocyclic compound.

More specific examples thereof include epoxy compounds described in the section "2. Curable Compound" in the section "C. Curable Composition" to be described later.

Examples of the above-mentioned polynuclear polyhydric phenol compound include a compound having a naphthalene structure, a compound having a biphenol structure, a compound having a bisphenol structure, and a novolac-type phenol resin.

In this disclosure, the above-mentioned polynuclear polyhydric phenol compound is preferably a compound having a bisphenol structure. This is because the above-mentioned curing agent is more excellent in low-temperature curability and storage stability.

Examples of the above-mentioned compound having a bisphenol structure serving as a compound in which two hydroxyphenyl groups are bonded by one atom include: methylenebisphenol (bisphenol F) and methylenebis(orthocresol); ethylidenebisphenol; compounds each having a bisphenol A structure, such as isopropylidenebisphenol (bisphenol A), isopropylidenebis(orthocresol), and tetrabromobisphenol A; and 1,1,3-tris(4-hydroxyphenyl)butane, 1,1,2,2-tetra(4-hydroxyphenyl)ethane, thiobisphenol, sulfobisphenol, and oxybisphenol. The phrase "two hydroxyphenyl groups are bonded by one atom" indicates that the linking chain length of a linking group for linking the benzene rings of two hydroxyphenyl groups is one atom. The term "bisphenol A structure" refers to a structure in which two hydroxyphenyl groups are bonded by an isopropylidene group at benzene rings, and a polyglycidyl etherified product of a polyhydric phenol compound having the structure encompasses a so-called bisphenol A-type epoxy resin.

In addition, examples of a compound having a bisphenol structure in which two hydroxyphenyl groups are bonded by two or more atoms include 1,3-bis(4-hydroxycumylbenzene) and 1,4-bis(4-hydroxycumylbenzene).

Examples of an alkylene oxide for forming the alkylene oxide adduct of the above-mentioned polynuclear polyhydric phenol compound include ethylene oxide and propylene oxide.

The content of a site derived from an epoxy resin in the above-mentioned modified amine may be 10 parts by mass or more and 60 parts by mass or less, and is preferably 20 parts by mass or more and 50 parts by mass or less, more preferably 25 parts by mass or more and 45 parts by mass or less in 100 parts by mass of the modified amine. This is because the above-mentioned curing agent is more excellent in low-temperature curability and storage stability.

### (3) Phenol Mixture

The above-mentioned phenol mixture contains at least one of the above-mentioned amine or modified amine, and the phenol resin.

In this disclosure, the above-mentioned phenol mixture preferably contains the modified amine and the phenol resin. This is because the above-mentioned curing agent is more excellent in low-temperature curability and storage stability.

The same amines as those described in the section of the modified amine described above may each be used as the amine for forming the modified amine to be used for the above-mentioned phenol mixture, but the amine is preferably a tertiary amine having at least one of a primary amino group or a secondary amino group, or a urea structure amine compound having at least one of a primary amino group or a secondary amino group, particularly preferably a tertiary amine having at least one of a primary amino group or a secondary amino group. This is because the above-mentioned curing agent is more excellent in low-temperature curability and storage stability.

Preferred structures of the tertiary amine having at least one of a primary amino group or a secondary amino group, and the urea structure amine compound having at least one of a primary amino group or a secondary amino group described above may be the same as those described in the section "(2) Modified Amine" described above.

A compound having two or more phenolic hydroxy groups may be used as the phenol resin to be used for the above-mentioned phenol mixture.

Examples of such phenol resin include polyhydric phenol compounds, such as a phenol novolac resin (polyhydric phenol compound in which phenol nuclei are linked with methylene groups), a cresol novolac resin (polyhydric phenol compound in which cresol nuclei are linked with methylene groups), an aromatic hydrocarbon formaldehyde resin-modified phenol resin, a dicyclopentadiene phenol addition-type resin (polyhydric phenol compound in which phenol nuclei are linked with dicyclopentadiene groups), a phenol aralkyl resin (polyhydric phenol compound in which phenol nuclei are linked with divalent groups each having an aromatic ring, such as a phenylene group and a biphenylene group; Xylok resin), a naphthol aralkyl resin, a trisphenylolmethane resin, a tetraphenylolethane resin, a naphthol novolac resin, a naphthol-phenol co-condensed novolac resin, a naphthol-cresol co-condensed novolac resin, a biphenyl-modified phenol resin (polyhydric phenol compound in which phenol nuclei are linked with bismethylene groups), a biphenyl-modified naphthol resin (polyhydric naphthol compound in which phenol nuclei are linked with bismethylene groups), an aminotriazine-modified phenol resin (compound having a phenol skeleton, a triazine ring, and a primary amino group in its molecular structure), and an alkoxy group-containing aromatic ring-modified novolac resin (polyhydric phenol compound in which a phenol nucleus and an alkoxy group-containing aromatic ring are linked with formaldehyde).

Examples of the phenol resin include Phenol-novolac H-1, H-2, H-3, H-4, and H-5, and MEP-1100-N manufactured by Meiwa Plastic Industries, Ltd., phenol novolacs manufactured by Gun Ei Chemical Industry Co., Ltd. (PSM series such as PSM-4326), ortho-cresol novolac MER-130, triphenolmethane-type MEH-7500, tetrakisphenol-type MEH-7600, naphthol-type MEH-7700, phenol aralkyl-type MEH-7800 and MEH-7851, triphenol-type R-3, bisphenol novolac-type MEP-6309 and MEP-6309E, and liquid phenol novolacs MEH-8000H, MEH-8005, MEH-8010, MEH-8015, and MEH-8205.

Examples of a dicyclopentadiene phenol epoxy resin include ERM-6085, ERM-6095, ERM-6105, ERM-6115, ERM-6125, and ERM-6140 manufactured by Songwon Industrial Co., Ltd.

In this disclosure, a linking group for linking phenols for forming the above-mentioned phenol resin is preferably an alkylene group such as a methylene group or an alicyclic group such as a dicyclopentadiene group, and the curable composition more preferably includes a phenol novolac resin, a cresol novolac resin, and a dicyclopentadiene phenol addition-type resin, and still more preferably includes a phenol novolac resin and a dicyclopentadiene phenol addition-type resin. This is because the above-mentioned composition may be used as a curing agent having an excellent balance between storage stability and low-temperature curability.

The content of the phenol resin in the above-mentioned phenol mixture is preferably 1 part by mass or more and 70 parts by mass or less, more preferably 10 parts by mass or more and 65 parts by mass or less, still more preferably 30 parts by mass or more and 60 parts by mass or less, particularly preferably 35 parts by mass or more and 55 parts by mass or less, most preferably 40 parts by mass or more and 50 parts by mass or less in 100 parts by mass of the above-mentioned mixture.
This is because the above-mentioned curing agent is more excellent in low-temperature curability and storage stability.

### (4) Combination Product

The above-mentioned anionic curing agent may be a combination product in which two or more kinds of anionic curing agents are used in combination.

Such combination product is preferably a combination product containing two or more kinds of amine-based curing agents, more preferably a combination product containing an amine, still more preferably a combination product containing at least two or more kinds of amines (hereinafter sometimes referred to as "combination product 1"), a combination product containing at least an amine and a modified amine (hereinafter sometimes referred to as "combination product 2"), or a combination product containing at least an amine and a phenol mixture (hereinafter sometimes referred to as "combination product 3"), particularly preferably the above-mentioned combination product 1. This is because the above-mentioned curing agent is more excellent in low-temperature curability and storage stability.

The amine in the above-mentioned combination product preferably includes the above-mentioned guanamine. This is because the above-mentioned curing agent is more excellent in low-temperature curability and storage stability.

The amines in the above-mentioned combination product 1 preferably include the above-mentioned guanamine. This is because the above-mentioned curing agent is more excellent in low-temperature curability and storage stability.

In this disclosure, the above-mentioned combination product 1 preferably contains the above-mentioned guanamine and at least one selected from the group consisting of: a urea; and a tertiary amine, more preferably contains the guanamine and a urea, and still more preferably contains the guanamine, and both of a urea and a tertiary amine. This is because the above-mentioned curing agent is more excellent in low-temperature curability and storage stability.

The descriptions regarding amines to be preferably used as the above-mentioned guanamine and the amine except the guanamine may be the same as those described as the amines that may be preferably used in the section "(1) Amine" described above.

The amine in each of the above-mentioned combination product 2 and combination product 3 preferably includes the above-mentioned guanamine. This is because the above-mentioned curing agent is more excellent in low-temperature curability and storage stability.

The above-mentioned combination product 2 and combination product 3 each preferably contain, as the amine, the above-mentioned guanamine and tertiary amine. This is because the above-mentioned curing agent is more excellent in low-temperature curability and storage stability.

The descriptions regarding materials to be preferably used as the amine, modified amine, and phenol mixture in the above-mentioned combination product 2 and combination product 3 may be the same as those described as the materials that may be preferably used in the respective sections "(2) Modified Amine" and "(3) Phenol Mixture" described above. This is because the above-mentioned curing agent is more excellent in low-temperature curability and storage stability.

### (5) Others

The content of the above-mentioned anionic curing agent is preferably 10 parts by mass or more and 95 parts by mass or less, more preferably 40 parts by mass or more and 90 parts by mass or less, still more preferably 50 parts by mass or more and 85 parts by mass or less, particularly preferably 60 parts by mass or more and 80 parts by mass or less, most preferably 65 parts by mass or more and 75 parts by mass or less in 100 parts by mass of the above-mentioned curing agent. This is because the above-mentioned curing agent is more excellent in low-temperature curability and storage stability.

The content of the above-mentioned anionic curing agent is preferably 60 parts by mass or more, more preferably 80 parts by mass or more and 99 parts by mass or less, still more preferably 85 parts by mass or more and 98.5 parts by mass or less, particularly preferably 90 parts by mass or more and 98 parts by mass or less, most preferably 94 parts by mass or more and 97.5 parts by mass or less in 100 parts by mass of the above-mentioned curing agent from the viewpoint of facilitating the formation of a cured product having excellent adhesiveness. This is because the above-mentioned curing agent is more excellent in low-temperature curability and storage stability. This is also because it becomes easier for the curing agent to form a cured product having excellent adhesiveness.

The content of the above-mentioned anionic curing agent is preferably 10 parts by mass or more and 95 parts by mass or less, more preferably 40 parts by mass or more and 90 parts by mass or less, still more preferably 50 parts by mass or more and 85 parts by mass or less, particularly preferably 60 parts by mass or more and 80 parts by mass or less, most preferably 65 parts by mass or more and 75 parts by mass or less in 100 parts by mass of the total of the above-mentioned anionic curing agent and compound A. This is because the above-mentioned curing agent is more excellent in low-temperature curability and storage stability.

The content of the above-mentioned anionic curing agent is preferably 60 parts by mass or more, more preferably 80 parts by mass or more and 99 parts by mass or less, still more preferably 85 parts by mass or more and 98.5 parts by mass or less, particularly preferably 90 parts by mass or more and 98 parts by mass or less, most preferably 94 parts by mass or more and 97.5 parts by mass or less in 100 parts by mass of the total of the above-mentioned anionic curing agent and compound A. This is because the above-mentioned curing agent is more excellent in low-temperature curability and storage stability. This is also because it becomes easier for the curing agent to form a cured product having excellent adhesiveness.

When the above-mentioned anionic curing agent contains a guanamine, the content of the above-mentioned guanamine is preferably 10 parts by mass or more and 99 parts by mass or less, more preferably 50 parts by mass or more and 95 parts by mass or less, still more preferably 60 parts by mass or more and 90 parts by mass or less, particularly preferably 70 parts by mass or more and 85 parts by mass or less, most preferably 75 parts by mass or more and 85 parts by mass or less in 100 parts by mass of the curing agent. This is because the above-mentioned curing agent is more excellent in low-temperature curability and storage stability. This is also because it becomes easier for the curing agent to form a cured product having excellent adhesiveness.

The content of the above-mentioned guanamine is preferably 10 parts by mass or more and 99 parts by mass or less, more preferably 50 parts by mass or more and 95 parts by mass or less, still more preferably 60 parts by mass or more and 90 parts by mass or less, particularly preferably 70 parts by mass or more and 85 parts by mass or less, most preferably 75 parts by mass or more and 85 parts by mass or less in 100 parts by mass of the anionic curing agent. This is because the above-mentioned curing agent is more excellent in low-temperature curability and storage stability. This is also because it becomes easier for the curing agent to form a cured product having excellent adhesiveness.

The content of the above-mentioned guanamine is preferably 10 parts by mass or more and 99.9 parts by mass or less, more preferably 50 parts by mass or more and 99.5 parts by mass or less, still more preferably 90 parts by mass or more and 99 parts by mass or less, particularly preferably 92 parts by mass or more and 98.5 parts by mass or less, most preferably 95 parts by mass or more and 98 parts by mass or less in 100 parts by mass of the total of the guanamine and the compound A. This is because the above-mentioned curing agent is more excellent in low-temperature curability and storage stability. This is also because it becomes easier for the curing agent to form a cured product having excellent adhesiveness.

When the above-mentioned anionic curing agent contains a tertiary amine, the content of the tertiary amine is preferably 1 part by mass or more and 20 parts by mass or less, more preferably 4 parts by mass or more and 15 parts by mass or less, still more preferably 6 parts by mass or more and 10 parts by mass or less in 100 parts by mass of the anionic curing agent. This is because the above-mentioned curing agent is more excellent in low-temperature curability and storage stability. This is also because it becomes easier to lower the melting point of the above-mentioned curing agent, and hence the curing agent becomes particularly excellent in low-temperature curability and also excellent in storage stability.

The content of the tertiary amine is free of the content of a modified product of the tertiary amine.

The content of the above-mentioned tertiary amine is preferably 0.1 part by mass or more and 10 parts by mass or less, more preferably 0.2 part by mass or more and 5 parts by mass or less, still more preferably 0.3 part by mass or more and 1 part by mass or less in 100 parts by mass of the total of the curing agent. This is because the above-mentioned curing agent is more excellent in low-temperature curability and storage stability. This is also because it becomes easier for the curing agent to form a cured product having excellent adhesiveness.

The content of the above-mentioned tertiary amine is preferably 0.1 part by mass or more and 10 parts by mass or less, more preferably 0.2 part by mass or more and 5 parts by mass or less, still more preferably 0.3 part by mass or more and 1 part by mass or less in 100 parts by mass of the anionic curing agent. This is because the above-mentioned curing agent is more excellent in low-temperature curability and storage stability. This is also because it becomes easier for the curing agent to form a cured product having excellent adhesiveness.

The content of the above-mentioned tertiary amine is preferably 1 part by mass or more and 50 parts by mass or less, more preferably 10 parts by mass or more and 40 parts by mass or less, still more preferably 15 parts by mass or more and 30 parts by mass or less in 100 parts by mass of the total of the tertiary amine and the compound A. This is because the above-mentioned curing agent is more excellent in low-temperature curability and storage stability. This is also because it becomes easier for the curing agent to form a cured product having excellent adhesiveness.

When the above-mentioned anionic curing agent contains a urea, the content of the above-mentioned urea is preferably 1 part by mass or more and 40 parts by mass or less, more preferably 10 parts by mass or more and 30 parts by mass or less, still more preferably 12 parts by mass or more and 25 parts by mass or less in 100 parts by mass of the total of the curing agent. This is because the above-mentioned curing agent is more excellent in low-temperature curability and storage stability. This is also because it becomes easier for the curing agent to form a cured product having excellent adhesiveness.

The content of the above-mentioned urea is preferably 1 part by mass or more and 40 parts by mass or less, more preferably 10 parts by mass or more and 30 parts by mass or less, still more preferably 15 parts by mass or more and 25 parts by mass or less in 100 parts by mass of the anionic curing agent. This is because the above-mentioned curing agent is more excellent in low-temperature curability and storage stability. This is also because it becomes easier for the curing agent to form a cured product having excellent adhesiveness.

The content of the above-mentioned urea is preferably 30 parts by mass or more and 99 parts by mass or less, more preferably 50 parts by mass or more and 98 parts by mass or less, still more preferably 60 parts by mass or more and 95 parts by mass or less, particularly preferably 65 parts by mass or more and 94 parts by mass or less, most preferably 70 parts by mass or more and 90 parts by mass or less in 100 parts by mass of the total of the urea and the compound A. This is because the above-mentioned curing agent is more excellent in low-temperature curability and storage stability. This is also because it becomes easier for the curing agent to form a cured product having excellent adhesiveness.

### 3. Other Component

The above-mentioned curing agent may contain any other component except the compound A and the anionic curing agent.

Such other component may be the same as that described in the section "C. Curable Composition" to be described later.

### 4. Application

The descriptions regarding a method of using the above-mentioned curing agent and an application of the curable composition using the above-mentioned curing agent may be the same as those described in the section "2. Application" of the section "A. Curing Agent Material" described above, and hence descriptions thereof in this section are omitted.

### C. Curable Composition

Next, the curable composition of this disclosure is described.

The curable composition of this disclosure includes: a compound having a structural unit having a tertiary amine structural group and having a weight-average molecular weight of 5,000 or more and 30,000 or less; and a curable compound.

According to this disclosure, the curable composition having excellent low-temperature curability and storage stability can be obtained.

The curable composition of this disclosure includes the compound A and the curable compound.

Each component of the curable composition of this disclosure is described below.

### 1. Compound A

The descriptions regarding the compound A to be used in this disclosure may be the same as those described in the section "A. Curing Agent Material" described above, and hence descriptions thereof in this section are omitted.

The content of the compound A is preferably 0.5 part by mass or more and 30 parts by mass or less, more preferably 1 part by mass or more and 10 parts by mass or less, still more preferably 1.5 parts by mass or more and 5 parts by mass or less in 100 parts by mass of the above-mentioned curable composition. This is because the above-mentioned curable composition can more effectively exhibit the following effect: the composition is excellent in low-temperature curability and storage stability.

The content of the compound A is preferably 1 part by mass or more and 30 parts by mass or less, more preferably 1.5 parts by mass or more and 20 parts by mass or less, still more preferably 2 parts by mass or more and 10 parts by mass or less, particularly preferably 2.5 parts by mass or more and 5 parts by mass or less with respect to 100 parts by mass of the above-mentioned curable compound. This is because the above-mentioned curable composition can more effectively exhibit the following effect: the composition is excellent in low-temperature curability and storage stability.

### 2. Curable Compound

A compound that can be polymerized to a high molecular weight by anionic curing may be used as the above-mentioned curable compound.

Examples of such curable compound include a cyclic compound, a chain conjugated diene-based monomer, a vinyl aromatic-based monomer, a polar vinyl-based monomer, and an α-olefin-based monomer (e.g., ethylene or propylene).

In this disclosure, the above-mentioned curable compound preferably includes a cyclic compound. This is because the above-mentioned curable composition can more effectively exhibit the following effect: the composition is excellent in low-temperature curability and storage stability.

Examples of the above-mentioned cyclic compound include an epoxy-based compound, a cyclic lactone, a cyclic lactam, and a cyclic siloxane.

In this disclosure, the above-mentioned cyclic compound preferably includes an epoxy-based compound. This is because the above-mentioned curable composition can more effectively exhibit the following effect: the composition is excellent in low-temperature curability and storage stability.

Examples of the above-mentioned epoxy-based compound include: polyglycidyl etherified products of mononuclear polyhydric phenol compounds, such as hydroquinone, resorcin, pyrocatechol, and phloroglucinol; polyglycidyl etherified products of polynuclear polyhydric phenol compounds, such as dihydroxynaphthalene, biphenol, methylenebisphenol (bisphenol F), methylenebis(orthocresol), ethylidenebisphenol, isopropylidenebisphenol (bisphenol A), isopropylidenebis(orthocresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolac, ortho-cresol novolac, ethylphenol novolac, butylphenol novolac, octylphenol novolac, resorcin novolac, and terpenephenol; polyglycidyl etherified products of polyhydric alcohol compounds, such as ethylene glycol, propylene glycol, butylene glycol, hexanediol, polyethylene glycol, polypropylene glycol, thioglycol, dicyclopentadiene dimethanol, 2,2-bis(4-hydroxycyclohexyl)propane (hydrogenated bisphenol A), glycerin, trimethylolpropane, pentaerythritol, sorbitol, and a bisphenol A-alkylene oxide adduct; glycidyl esterified products of aliphatic, aromatic, or alicyclic polybasic acids, such as maleic acid, fumaric acid, itaconic acid, succinic acid, glutaric acid, suberic acid, adipic acid, azelaic acid, sebacic acid, a dimer acid, a trimer acid, phthalic acid, isophthalic acid, terephthalic acid, trimellitic acid, trimesic acid, pyromellitic acid, tetrahydrophthalic acid, and endomethylenetetrahydrophthalic acid, and a homopolymer or copolymer of glycidyl methacrylate; epoxy compounds each having a glycidylamino group, such as N,N-diglycidylaniline, bis(4-(N-methyl-N-glycidylamino)phenyl)methane, diglycidyl orthotoluidine, N,N-bis(2,3-epoxypropyl)-4-(2,3-epoxypropoxy)-2-methylaniline, N,N-bis(2,3-epoxypropyl)-4-(2,3-epoxypropoxy)aniline, and N,N,N',N'-tetra(2,3-epoxypropyl)-4,4-diaminodiphenylmethane; epoxidized products of cyclic olefin compounds, such as vinylcyclohexene diepoxide, cyclopentadiene diepoxide, 3,4-epoxycyclohexylmethyl-3,4-epoxycyclohexanecarboxylate, 3,4-epoxy-6-methylcyclohexylmethyl-6-methylcyclohexanecarboxylate, and bis(3,4-epoxy-6-methylcyclohexylmethyl)adipate; epoxidized conjugated diene polymers, such as epoxidized polybutadiene and an epoxidized styrene-butadiene copolymer; heterocyclic compounds such as triglycidyl isocyanurate; and modified epoxy compounds obtained by modifying these compounds. Examples of the above-mentioned modified epoxy compound include a urethane-modified epoxy resin modified with urethane, a chelate-modified epoxy resin modified by using phosphoric acid (hereinafter sometimes referred to as "phosphoric acid-modified epoxy resin"), and a rubber-modified epoxy resin modified to a product containing a rubber component.

In this disclosure, the above-mentioned modified epoxy compound may be any compound as long as the compound can exhibit the following effect: the compound is excellent in low-temperature curability and storage stability. However, the compound preferably contains at least one kind of a phosphoric acid-modified epoxy resin or a rubber-modified epoxy resin. This is because a curing agent having excellent low-temperature curability can be achieved and a curing agent having excellent curability can be easily obtained.

The above-mentioned phosphoric acid-modified epoxy resin is a resin modified by using phosphoric acid, and specific examples thereof include a resin obtained by reacting an epoxy compound with phosphoric acid, and a resin obtained by reacting an epoxy compound, phosphoric acid, and a polyurethane having an isocyanate group.

An example of the above-mentioned rubber-modified epoxy resin is a resin containing a rubber component obtained by: homopolymerizing each component, such as isoprene rubber, butadiene, styrene, acrylonitrile, or chloroprene, serving as a rubber component; or copolymerizing two or more kinds of components, the resin having an epoxy group at a terminal.

The above-mentioned urethane-modified epoxy resin is obtained by reacting an epoxy compound having at least one hydroxy group in a molecule thereof with a polyurethane in which an isocyanate group remains, and the above-mentioned polyurethane is obtained by reacting a polyhydroxy compound and a polyisocyanate compound. In the reaction, the polyisocyanate compound may be used in an excess amount with respect to the polyhydroxy compound.

The above-mentioned epoxy-based compounds may be used alone or in combination thereof.

In this disclosure, the above-mentioned epoxy-based compound preferably contains a polyglycidyl etherified product of a polynuclear polyhydric phenol compound, more preferably contains a polyglycidyl etherified product of a polynuclear polyhydric phenol compound having a bisphenol structure in which two hydroxyphenyl groups are bonded by one atom, and still more preferably contains a polyglycidyl etherified product of a compound having a bisphenol A structure. This is because the above-mentioned curable composition can more effectively exhibit the following effect: the composition is excellent in low-temperature curability and storage stability.

Examples of the above-mentioned cyclic lactone, cyclic lactam, cyclic siloxane, and the like include compounds described in WO 2022/138769 A1.

Examples of the above-mentioned chain conjugated diene-based monomer, vinyl aromatic-based monomer, polar vinyl-based monomer, and the like include compounds described in JP 6184676 B2.

The content of the above-mentioned curable compound is preferably 10 parts by mass or more and 90 parts by mass or less, more preferably 30 parts by mass or more and 80 parts by mass or less, still more preferably 40 parts by mass or more and 70 parts by mass or less, particularly preferably 50 parts by mass or more and 65 parts by mass or less in 100 parts by mass of the above-mentioned curable composition. This is because the above-mentioned curable composition can more effectively exhibit the following effect: the composition is excellent in low-temperature curability and storage stability.

### 3. Anionic Curing Agent

The above-mentioned curable composition preferably includes an anionic curing agent in addition to the compound A and the curable compound. This is because the above-mentioned curable composition is more excellent in low-temperature curability and storage stability.

The descriptions regarding the anionic curing agent to be used in this disclosure may be the same as those described in the section "B. Curing Agent" described above, and hence descriptions thereof in this section are omitted.

The content of the above-mentioned anionic curing agent is preferably 0.5 part by mass or more and 15 parts by mass or less, more preferably 1 part by mass or more and 10 parts by mass or less, still more preferably 3 parts by mass or more and 8 parts by mass or less, particularly preferably 4 parts by mass or more and 6 parts by mass or less in 100 parts by mass of the above-mentioned curable composition. This is because the above-mentioned curable composition is more excellent in low-temperature curability and storage stability.

The content of the above-mentioned anionic curing agent is preferably 1 part by mass or more and 30 parts by mass or less, more preferably 2 parts by mass or more and 20 parts by mass or less, still more preferably 4 parts by mass or more and 15 parts by mass or less, particularly preferably 5 parts by mass or more and 10 parts by mass or less in 100 parts by mass of the above-mentioned curable composition. This is because the above-mentioned curing agent is more excellent in low-temperature curability and storage stability. This is also because it becomes easier for the curing agent to form a cured product having excellent adhesiveness.

The content of the above-mentioned anionic curing agent is preferably 1 part by mass or more and 30 parts by mass or less, more preferably 3 parts by mass or more and 20 parts by mass or less, still more preferably 5 parts by mass or more and 15 parts by mass or less with respect to 100 parts by mass of the above-mentioned curable compound. This is because the above-mentioned curing agent is more excellent in low-temperature curability and storage stability. This is also because it becomes easier for the curing agent to form a cured product having excellent adhesiveness.

The descriptions regarding, for example, the content of the above-mentioned anionic curing agent in 100 parts by mass of the total of the anionic curing agent and the compound A may be the same as those described in the section "B. Curing Agent" described above, and hence descriptions thereof in this section are omitted.

### 4. Other Component

The above-mentioned curable composition may contain any other component except the compound A, the curable compound, and the anionic curing agent.

Examples of such other component include a blocked isocyanate, an isocyanate curing catalyst, a filler, a plasticizer, a colorant, an antioxidant, a foaming agent, a diluent, and a UV absorber.

In this disclosure, when the above-mentioned curable compound is an epoxy compound, the above-mentioned other component preferably contains a blocked isocyanate and a filler. This is because the above-mentioned curable composition is more excellent in low-temperature curability and storage stability.

### (1) Blocked Isocyanate

A compound having a structure in which an isocyanate group is reacted with a blocking agent may be used as the above-mentioned blocked isocyanate.

Examples of such blocked isocyanate include: a blocked product of a polyisocyanate compound serving as a compound in which an isocyanate group in a polyisocyanate compound is reacted with a blocking agent; and a blocked product of a urethane polyisocyanate compound serving as a compound in which an isocyanate group in a urethane polyisocyanate compound obtained by reacting a polyisocyanate compound and a polyol compound is reacted with a blocking agent.

In this disclosure, the above-mentioned blocked isocyanate preferably includes the blocked product of a urethane polyisocyanate compound. This is because the above-mentioned curable composition is more excellent in low-temperature curability and storage stability.

A compound free of a urethane bond formed by a reaction between an isocyanate group and a hydroxy group may be used as the above-mentioned polyisocyanate compound, and examples thereof include: aromatic diisocyanate compounds, such as phenylene diisocyanate, tolylene diisocyanate, diphenylmethane diisocyanate, naphthalene diisocyanate, xylylene diisocyanate, and tetramethylxylylene diisocyanate; chain aliphatic diisocyanate compounds, such as hexamethylene diisocyanate and lysine diisocyanate; and alicyclic structure-containing diisocyanate compounds, such as cyclohexane diisocyanate, isophorone diisocyanate, and 4,4'-dicyclohexylmethane diisocyanate. Further, for example, an isocyanurate compound obtained by trimerizing a diisocyanate compound, such as the above-mentioned aromatic diisocyanate compound, the above-mentioned chain aliphatic diisocyanate compound, or the alicyclic structure-containing diisocyanate compound, may also be used as the above-mentioned polyisocyanate compound.

In this disclosure, the above-mentioned polyisocyanate compound is preferably an alicyclic structure-containing diisocyanate compound. This is because the above-mentioned curable composition is more excellent in low-temperature curability and storage stability.

In this disclosure, a known method may be used as a method of synthesizing an isocyanurate compound by trimerizing a diisocyanate compound. An example of such method is a method described in WO 2021/106963 A1.

A compound having two or more hydroxy groups in a molecule thereof may be used as the above-mentioned polyol compound, and examples thereof include a polyether polyol, a polyester polyol, a polycarbonate polyol, a polyesteramide polyol, an acrylic polyol, and a polyurethane polyol.

Only one kind of compound may be incorporated as the above-mentioned polyol compound, or two or more kinds of compounds may be included.

The descriptions regarding such polyol compound may be the same as, for example, those described in JP 5322912 B2 and WO 2021/106963 A1.

Examples of the above-mentioned blocking agent include: active methylene compounds, such as a malonic acid diester (e.g., diethyl malonate), acetylacetone, and an acetoacetic acid ester (e.g., ethyl acetoacetate); oxime compounds, such as acetoxime, methyl ethyl ketoxime (MEK oxime), and methyl isobutyl ketoxime (MIBK oxime); monohydric alcohols, such as methyl alcohol, ethyl alcohol, propyl alcohol, butyl alcohol, heptyl alcohol, hexyl alcohol, octyl alcohol, 2-ethylhexyl alcohol, isononyl alcohol, and stearyl alcohol, and isomers thereof; glycol derivatives, such as methyl glycol, ethyl glycol, ethyl diglycol, ethyl triglycol, butyl glycol, and butyl diglycol; amine compounds such as dicyclohexylamine; phenols, for example, monophenols, such as phenol, cresol, ethylphenol, n-propylphenol, isopropylphenol, butylphenol, tert-butylphenol, octylphenol, nonylphenol, dodecylphenol, cyclohexylphenol, chlorophenol, and bromophenol, and diphenols, such as resorcin, catechol, hydroquinone, bisphenol A, bisphenol S, bisphenol F, and naphthol; ε-caprolactone; and ε-caprolactam.

A known reaction method may be used as a method of reacting an isocyanate group included in the above-mentioned polyisocyanate with the blocking agent, a method of reacting an isocyanate group included in the above-mentioned polyurethane polyisocyanate with the blocking agent, or the like. In the above-mentioned reaction, the descriptions regarding the addition amount of the blocking agent, a reaction temperature, and the like may be the same as those described in JP 5322912 B2, WO 2021/106963 A1, and the like.

The content of the above-mentioned blocked isocyanate is preferably 1 part by mass or more and 30 parts by mass or less, more preferably 5 parts by mass or more and 25 parts by mass or less, still more preferably 10 parts by mass or more and 20 parts by mass or less in 100 parts by mass of the above-mentioned curable composition. This is because the above-mentioned curable composition is more excellent in low-temperature curability and storage stability.

The content of the above-mentioned blocked isocyanate is preferably 10 parts by mass or more and 40 parts by mass or less, more preferably 15 parts by mass or more and 35 parts by mass or less, still more preferably 20 parts by mass or more and 30 parts by mass or less with respect to 100 parts by mass of the above-mentioned curable compound. This is because the above-mentioned curable composition is more excellent in low-temperature curability and storage stability.

### (2) Isocyanate Curing Catalyst

The curable composition of this disclosure preferably contains an isocyanate curing catalyst that accelerates a reaction between an isocyanate group, which is produced by the desorption of the blocking agent from the above-mentioned blocked isocyanate, and an active hydrogen group. This is because the above-mentioned curable composition is more excellent in low-temperature curability and storage stability.

Examples of the active hydrogen group include a hydroxy group, a phenol group, an amino group, an imino group, a carboxyl group, a urethane group, a thiol group, and a sulfonic acid group.

Examples of the above-mentioned isocyanate curing catalyst include an amine catalyst and an organometallic catalyst.

The curable composition may contain only one kind or a combination of two or more kinds of the above-mentioned isocyanate curing catalysts.

Examples of the organometallic catalyst include stannous diacetate, stannous dioctoate, stannous dioleate, stannous dilaurate, dibutyltin oxide, dibutyltin diacetate, dibutyltin dilaurate, dibutyltin dichloride, dioctyltin dilaurate, lead octanoate, lead naphthenate, nickel naphthenate, and cobalt naphthenate.

In this disclosure, the above-mentioned organometallic catalyst preferably contains a tin-containing compound, such as dibutyltin oxide, dibutyltin diacetate, dibutyltin dilaurate, dibutyltin dichloride, or dioctyltin dilaurate, and more preferably contains dibutyltin dilaurate, dioctyltin dilaurate, or the like. This is because the above-mentioned curable composition is more excellent in low-temperature curability and storage stability.

For example, those described as catalysts used in synthesizing a polyurethane resin described in JP 6806488 B2 may each be used as the above-mentioned amine catalyst.

### (3) Filler

When the above-mentioned curable composition is used for forming a cured product having excellent physical strength, the curable composition preferably contains a filler.

Examples of the filler include: silicas, such as fused silica, fused spherical silica, crystalline silica, colloidal silica, fumed silica, and silica gel; metal oxides, such as alumina, iron oxide, and antimony trioxide; ceramics, such as silicon nitride, aluminum nitride, boron nitride, and silicon carbide; minerals, such as mica and montmorillonite; metal hydroxides, such as aluminum hydroxide and magnesium hydroxide, or products obtained by modifying these hydroxides by organic modification treatment or the like; metal carbonates, such as calcium carbonate, calcium silicate, magnesium carbonate, and barium carbonate, or products obtained by modifying these carbonates by organic modification treatment or the like; pigments, such as a metal borate and carbon black; inorganic fillers, such as a carbon fiber, graphite, whisker, kaolin, talc, a glass fiber, glass beads, glass microspheres, silica glass, layered clay mineral, clay, silicon carbide, quartz, aluminum, and zinc; and organic fillers, such as acrylic beads, polymer fine particles, transparent resin beads, wood flour, pulp, and cotton chips.

In this disclosure, the above-mentioned filler preferably includes an inorganic filler, more preferably includes a silica or a metal carbonate, and still more preferably includes both of a silica and a metal carbonate.

The content of the above-mentioned filler is preferably 5 parts by mass or more and 40 parts by mass or less, more preferably 10 parts by mass or more and 30 parts by mass or less, still more preferably 15 parts by mass or more and 25 parts by mass or less in 100 parts by mass of the above-mentioned curable composition. This is because it becomes easier for the above-mentioned curable composition to form a cured product having excellent physical strength.

### (4) Plasticizer

Examples of the plasticizer include: benzoic acid esters such as diethylene glycol dibenzoate; phthalic acid esters, such as dibutyl phthalate (DBP), di-2-ethylhexyl phthalate (DOP), diisononyl phthalate (DINP), diisodecyl phthalate (DIDP), diundecyl phthalate (DUP), and ditridecyl phthalate (DTDP); terephthalic acid esters such as bis(2-ethylhexyl) terephthalate (DOTP); isophthalic acid esters such as bis(2-ethylhexyl) isophthalate (DOIP); pyromellitic acid esters such as tetra-2-ethylhexyl pyromellitate (TOPM); aliphatic dibasic acid esters, such as di-2-ethylhexyl adipate (DOA), diisononyl adipate (DINA), diisodecyl adipate (DIDA), di-2-ethylhexyl sebacate (DOS), and diisononyl sebacate (DINS); phosphoric acid esters, such as tri-2-ethylhexyl phosphate (TOP) and tricresyl phosphate (TCP); alkyl esters of polyhydric alcohols such as pentaerythritol; polyesters each synthesized by the polyesterification of a dibasic acid such as adipic acid and a glycol, the polyesters each having a molecular weight of from 800 to 4,000; epoxidized esters, such as epoxidized soybean oil and epoxidized linseed oil; alicyclic dibasic acids such as hexahydrophthalic acid diisononyl ester; fatty acid glycol esters such as 1,4-butanediol dicaprate; tributyl acetylcitrate (ATBC); paraffin wax and chlorinated paraffin obtained by chlorinating n-paraffin; chlorinated fatty acid esters such as a chlorinated stearic acid ester; and higher fatty acid esters such as butyl oleate.

### (5) Colorant

For example, an inorganic pigment, such as titanium dioxide or carbon black, or an organic pigment, such as an azo-based pigment or a phthalocyanine-based pigment, may be used as the colorant.

### (6) Antioxidant

For example, a phenol-based antioxidant or an amine-based antioxidant may be used as the antioxidant.

### (7) Foaming Agent

For example, an azo-based foaming agent of a type that generates a gas by heating, such as azodicarbonamide or azobisformamide, may be used as the foaming agent.

### (8) Diluent

For example, a solvent, such as xylene or mineral turpentine, may be used as the diluent.

### (9) UV Absorber

For example, a benzotriazole-based compound may be used as the UV absorber.

The content of any other component except the blocked isocyanate and the filler may be any content as long as a desired cured product can be formed by the above-mentioned curable composition, and for example, the total content of the other component except the blocked isocyanate and the filler may be 40 parts by mass or less in 100 parts by mass of the above-mentioned curable composition.

### 5. Application

An application of the above-mentioned curable composition is not particularly limited as long as low-temperature curability and storage stability are required in the application. The descriptions regarding such application may be the same as those described in the section "2. Application" of the section "A. Curing Agent Material" described above, and hence descriptions thereof in this section are omitted.

### D. Cured Product

Next, the cured product of this disclosure is described.

The cured product of this disclosure is characterized by being a cured product of the above-mentioned curable composition.

According to this disclosure, when the above-mentioned curable composition is used, the cured product that is easily formed can be provided. More specifically, the curable composition has excellent low-temperature curability, and a cured product can be produced at low temperature. In addition, the curable composition has excellent storage stability, and hence a cured product can be easily obtained at a desired timing.

The descriptions regarding the above-mentioned curable composition may be the same as those described in the section "C. Curable Composition" described above, and hence descriptions thereof in this section are omitted.

Any method may be adopted as a method of producing the above-mentioned cured product as long as a cured product in a desired cured state can be formed, and for example, a method described in the section "E. Method of producing Cured Product" to be described later may be used.

An application of the cured product of this disclosure may be the same as, for example, those described as the applications of the curable composition described in the section "2. Application" of the section "A. Curing Agent Material" described above.

### E. Method of producing Cured Product

Next, the method of producing a cured product of this disclosure is described.

The method of producing a cured product of this disclosure includes a step of heating the above-mentioned curable composition.

According to this disclosure, when the above-mentioned curable composition is used, the method of producing a cured product that facilitates the formation of the above-mentioned cured product can be provided.

The method of producing a cured product of this disclosure includes the step of heating the curable composition.

Each step of the method of producing a cured product of this disclosure is described below.

### 1. Heating Step

This step is a step of heating the above-mentioned curable composition.

The descriptions regarding the above-mentioned curable composition may be the same as those described in the section "C. Curable Composition" described above, and hence descriptions thereof in this section are omitted.

The heating temperature of the above-mentioned curable composition may be any temperature at which a desired cured product can be formed. For example, the temperature is preferably 70°C or more and 200°C or less, more preferably 80°C or more and 190°C or less, still more preferably 90°C or more and 150°C or less, particularly preferably 95°C or more and 130°C or less. This is because the effects of this disclosure can be exhibited more effectively.

### 2. Others

The method of producing a cured product of this disclosure includes the above-mentioned heating step, but may include any other step as required.

An example of the above-mentioned other step is an application step of applying the above-mentioned curable composition.

An application of the cured product produced by the method of producing a cured product of this disclosure may be the same as, for example, those described as the applications of the curable composition described in the section "2. Application" of the section "A. Curing Agent Material" described above.

### F. Method of producing Curing Agent Material

Next, a method of producing a curing agent material of this disclosure is described.

The method of producing a curing agent material of this disclosure includes a reaction step of reacting: a polymer having a bonding functional group "b" which is at least one kind of group selected from the group consisting of: a hydroxy group, a carboxyl group, an epoxy group, and an amino group, and having a weight-average molecular weight of 3,000 or more and 25,000 or less; with a compound having a bonding functional group "c" capable of reacting with the above-mentioned bonding functional group "b" to form a covalent bond, and a tertiary amine structural group.

According to this disclosure, the above-mentioned curing agent material can be easily produced.

The production method of this disclosure includes the above-mentioned reaction step.

Each step of the production method of this disclosure is described in detail below.

### 1. Reaction Step

This step is a step of reacting the polymer having a bonding functional group "b" which is at least one kind of group selected from the group consisting of: a hydroxy group, a carboxyl group; an epoxy group, and an amino group, and having a weight-average molecular weight of 3,000 or more and 25,000 or less (hereinafter sometimes referred to as "polymer 1") with the compound having a bonding functional group "c" capable of reacting with the above-mentioned bonding functional group "b" to form a covalent bond, and a tertiary amine structural group (hereinafter sometimes referred to as "compound C").

### (1) Polymer 1

The above-mentioned polymer 1 is a polymer having the above-mentioned bonding functional group "b".

The descriptions regarding the above-mentioned bonding functional group "b" may be the same as those described in the section "A. Curing Agent Material" described above. Accordingly, the concept of a carboxyl group serving as the bonding functional group "b" also encompasses a dicarboxylic acid anhydride structure.

The above-mentioned polymer 1 may be a polymer having a structural unit derived from a hydroxy group-containing ethylenically unsaturated compound, a carboxyl group-containing ethylenically unsaturated compound, an epoxy group-containing ethylenically unsaturated compound, or an amino group-containing ethylenically unsaturated compound (hereinafter sometimes referred to as "structural unit A'").

The descriptions regarding the hydroxy group-containing ethylenically unsaturated compound, carboxyl group-containing ethylenically unsaturated compound, epoxy group-containing ethylenically unsaturated compound, and amino group-containing ethylenically unsaturated compound to be used for forming the above-mentioned structural unit A' may be the same as those described as the compound B in the section "A. Curing Agent Material" described above.

In this step, the above-mentioned polymer 1 preferably has a structural unit derived from a carboxyl group-containing ethylenically unsaturated compound as the structural unit A', more preferably has a structural unit derived from an unsaturated dicarboxylic acid or an unsaturated dicarboxylic acid anhydride, still more preferably has a structural unit derived from an unsaturated dicarboxylic acid anhydride, and particularly preferably has a structural unit derived from maleic anhydride. This is because the production of the above-mentioned curing agent material is further facilitated. This is also because it becomes easier for the curing agent material to be produced by the production method of this disclosure to form a curing agent more excellent in low-temperature curability and storage stability.

The content of the above-mentioned structural unit A' is preferably 5 mol or more and 80 mol or less, more preferably 10 mol or more and 60 mol or less, still more preferably 15 mol or more and 40 mol or less in 100 mol of all structural units for forming the above-mentioned polymer 1. This is because the production of the above-mentioned curing agent material is further facilitated.

The content of the above-mentioned structural unit A' is preferably 5 parts by mass or more and 80 parts by mass or less, more preferably 10 parts by mass or more and 60 parts by mass or less, still more preferably 15 parts by mass or more and 40 parts by mass or less in 100 parts by mass of the above-mentioned polymer 1. This is because the production of the above-mentioned curing agent material is further facilitated.

The above-mentioned polymer 1 may have a structural unit except the above-mentioned structural unit A' (hereinafter sometimes referred to as "structural unit B'").

Examples of such structural unit B' include structural units derived from an aromatic unsaturated compound, an aliphatic ethylenically unsaturated compound, a vinyl ether, a fatty acid vinyl, and an N-substituted maleimide.

The descriptions regarding the above-mentioned aromatic unsaturated compound, aliphatic ethylenically unsaturated compound, vinyl ether, fatty acid vinyl, and N-substituted maleimide may be the same as those described in the section "A. Curing Agent Material" described above.

The above-mentioned structural unit B' preferably includes a structural unit derived from at least one compound selected from the group consisting of: an aliphatic ethylenically unsaturated compound; and an aromatic unsaturated compound, more preferably includes a structural unit derived from an aromatic unsaturated compound, still more preferably includes a structural unit derived from a styrene, particularly preferably includes a structural unit derived from styrene or α-methylstyrene, and most preferably includes a structural unit derived from styrene. This is because the production of the above-mentioned curing agent material is further facilitated. This is also because it becomes easier for the curing agent material to be produced by the production method of this disclosure to form a curing agent more excellent in low-temperature curability and storage stability.

The content of the above-mentioned structural unit derived from an aromatic unsaturated compound is preferably 50 parts by mass or more, more preferably 80 parts by mass or more, still more preferably 90 parts by mass or more, particularly preferably 95 parts by mass or more, most preferably 98 parts by mass or more in 100 parts by mass of the above-mentioned structural unit B'. This is because the production of the above-mentioned curing agent material is further facilitated.

The content of the above-mentioned structural unit B' is preferably 20 mol or more and 95 mol or less, more preferably 40 mol or more and 90 mol or less, still more preferably 60 mol or more and 85 mol or less in 100 mol of all the structural units for forming the above-mentioned polymer 1. This is because the production of the above-mentioned curing agent material is further facilitated.

The content of the above-mentioned structural unit B' is preferably 20 parts by mass or more and 95 parts by mass or less, more preferably 40 parts by mass or more and 90 parts by mass or less, still more preferably 60 parts by mass or more and 85 parts by mass or less in 100 parts by mass of the above-mentioned polymer 1. This is because the production of the above-mentioned curing agent material is further facilitated.

The weight-average molecular weight of the above-mentioned polymer 1 is preferably 3,000 or more and 25,000 or less, more preferably 4,000 or more and 20,000 or less, still more preferably 6,000 or more and 15,000 or less, particularly preferably 8,000 or more and 12,000 or less. This is because the production of the above-mentioned curing agent material is further facilitated.

### (2) Compound C

The descriptions regarding the above-mentioned compound C may be the same as those described in the section "A. Curing Agent Material" described above, and hence descriptions thereof in this section are omitted.

The addition amount of the above-mentioned compound C may be any amount as long as the amount of the compound C to be bonded to the polymer 1, that is, the reaction amount thereof can be set to fall within a desired range. For example, the amount is preferably 30 parts by mass or more and 300 parts by mass or less, more preferably 40 parts by mass or more and 200 parts by mass or less, still more preferably 45 parts by mass or more and 100 parts by mass or less, particularly preferably 50 parts by mass or more and 80 parts by mass or less with respect to 100 parts by mass of the above-mentioned polymer 1. This is because the production of the above-mentioned curing agent material is further facilitated.

The addition amount of the above-mentioned compound C may be any amount as long as the amount of the compound C to be bonded to the polymer 1, that is, the reaction amount thereof can be set to fall within a desired range. For example, the amount is preferably 0.5 mol or more and 5 mol or less, more preferably 0.6 mol or more and 3 mol or less, still more preferably 0.8 mol or more and 2 mol or less, particularly preferably 0.85 mol or more and 1.4 mol or less with respect to 1 mol of the structural unit B' in the above-mentioned polymer 1. This is because the production of the above-mentioned curing agent material is further facilitated.

The reaction amount of the above-mentioned compound C, that is, the amount of the compound C to be bonded to the polymer 1 is preferably 10 parts by mass or more and 200 parts by mass or less, more preferably 20 parts by mass or more and 150 parts by mass or less, still more preferably 30 parts by mass or more and 100 parts by mass or less, particularly preferably 45 parts by mass or more and 80 parts by mass or less with respect to 100 parts by mass of the above-mentioned polymer 1. This is because the production of the above-mentioned curing agent material is further facilitated.

The reaction amount of the above-mentioned compound C, that is, the amount of the compound C to be bonded to the polymer 1 is preferably 0.1 mol or more and 2 mol or less, more preferably 0.2 mol or more and 1.5 mol or less, still more preferably 0.3 mol or more and 1.0 mol or less with respect to 1 mol of the structural unit B' in the above-mentioned polymer 1. This is because the production of the above-mentioned curing agent material is further facilitated.

### (3) Reaction Method

Any method may be used as a method for a reaction between the above-mentioned polymer 1 and compound C as long as a covalent bond can be formed by the bonding functional group "b" in the above-mentioned polymer 1 and the bonding functional group "c" in the compound C.

An example of such reaction method is a method including mixing and heating the above-mentioned polymer 1 and compound C.

The temperature of the above-mentioned heating is preferably 0°C or more and 200°C or less, more preferably 50°C or more and 150°C or less, still more preferably 80°C or more and 130°C or less. This is because the production of the above-mentioned curing agent material is further facilitated.

A method for the above-mentioned heating may be a method including heating the above-mentioned polymer 1 and compound C in a solvent.

Examples of the above-mentioned solvent include a hydrocarbon-based solvent, a ketone-based solvent, an ether-based solvent, a glyme-based solvent, and a halogen-based solvent.

In this step, the above-mentioned solvent is preferably a hydrocarbon-based solvent. This is because the production of the above-mentioned curing agent material is further facilitated.

Examples of the hydrocarbon-based solvent include toluene, xylene, hexane, cyclohexane, and n-heptane.

In this step, the above-mentioned hydrocarbon-based solvent is preferably an aromatic hydrocarbon-based solvent, such as toluene or xylene, more preferably toluene. This is because the production of the above-mentioned curing agent material is further facilitated.

Examples of the ketone-based solvent include acetone, methyl ethyl ketone, methyl isobutyl ketone, and cyclohexanone.

Examples of the ether-based solvent include tetrahydrofuran, 1,4-dioxane, 1,3-dioxane, and diethoxyethane.

Examples of the glyme-based solvent include monoglyme and diglyme.

Examples of the halogen-based solvent include dichloromethane and chloroform.

The time of the above-mentioned heating is preferably 0.1 hour or more and 10 hours or less, more preferably 0.5 hour or more and 8 hours or less, still more preferably 1 hour or more and 6 hours or less. This is because the production of the above-mentioned curing agent material is further facilitated.

### 2. Other Step

The above-mentioned production method may include any other step except the above-mentioned reaction step.

Examples of such other step include a solvent removal step of removing a solvent and a purification step of removing an unreacted substance.

A known method such as a method of subjecting a mixture after the above-mentioned reaction step to heating treatment or reduced pressure treatment may be used as a method of removing the above-mentioned solvent.

A known method, such as: a washing step, such as washing treatment using a solvent or water washing treatment; or a reprecipitation purification method, may be used as the above-mentioned purification step.

The descriptions regarding the curing agent material obtained by the above-mentioned production method, an application thereof, and the like may be the same as those described in the section "A. Curing Agent Material" described above, and hence descriptions thereof in this section are omitted.

### G. Others

This disclosure includes the following aspects.
[1] A curing agent material, including a compound having a structural unit having a tertiary amine structural group and having a weight-average molecular weight of 5,000 or more and 30,000 or less.
[2] The curing agent material according to the above-mentioned item [1], wherein the curing agent material is for use in combination with an anionic curing agent.
[3] The curing agent material according to the above-mentioned item [1] or [2], wherein the tertiary amine structural group has a tertiary amino group.
[4] The curing agent material according to any one of the above-mentioned items [1] to [3], wherein the structural unit having the tertiary amine structural group has at least one of a hydroxy group or a carboxyl group.
[5] The curing agent material according to any one of the above-mentioned items [1] to [4], wherein the structural unit having the tertiary amine structural group has a structural unit represented by the following general formula (100): 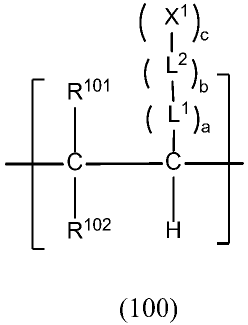 where R¹⁰¹ and R¹⁰² each independently represent a hydrogen atom, a halogen atom, a cyano group, a nitro group, a hydroxy group, a thiol group, a carboxyl group, a substituted or unsubstituted hydrocarbon group having 1 to 20 carbon atoms, or a group in which a methylene group in the hydrocarbon group is substituted with a divalent group selected from Group B below, L¹ represents a divalent group selected from -O-, -CO-, -CO-O-, -O-CO-, -CO-NR¹⁰³-, and -NR¹⁰³-CO-, R¹⁰³ represents a hydrogen atom, a substituted or unsubstituted hydrocarbon group having 1 to 10 carbon atoms, or a group in which a methylene group in the hydrocarbon group is substituted with a divalent group selected from Group B below, L² represents a (c+1)-valent hydrocarbon group having 1 to 20 carbon atoms or a group in which a methylene group in the hydrocarbon group is substituted with a divalent group selected from Group B below, X¹ represents a tertiary amine structural group, Group B represents -O-, -CO-, -CO-O-, -O-CO-, -NH-, -NHCO-, and -S-, "a" represents an integer of 0 or 1, "b" represents an integer of 0 or 1, and "c" represents an integer of from 1 to 10.
[6] The curing agent material according to any one of the above-mentioned items [1] to [5], wherein a content of the structural unit having the tertiary amine structural group is 1 part by mass or more and 99 parts by mass or less in 100 parts by mass of the compound.
[7] The curing agent material according to any one of the above-mentioned items [1] to [6], wherein a content of the structural unit having the tertiary amine structural group is 1 mol or more and 99 mol or less in 100 mol of all structural units in the compound.
[8] The curing agent material according to any one of the above-mentioned items [1] to [7], wherein the compound has, as a structural unit except the structural unit having the tertiary amine structural group, a structural unit derived from at least one compound selected from the group consisting of: a hydroxy group-containing ethylenically unsaturated compound, a carboxyl group-containing ethylenically unsaturated compound, and an aromatic unsaturated compound.
[9] The curing agent material according to the above-mentioned item [8], wherein a content of the structural unit except the structural unit having the tertiary amine structural group is 10 parts by mass or more and 90 parts by mass or less in 100 parts by mass of the compound.
[10] A curing agent, including: a compound having a structural unit having a tertiary amine structural group and having a weight-average molecular weight of 5,000 or more and 30,000 or less; and an anionic curing agent.
[11] The curing agent according to the above-mentioned item [10], wherein the anionic curing agent contains an amine-based curing agent.
[12] The curing agent according to the above-mentioned item [11], wherein the amine-based curing agent contains a guanamine.
[13] The curing agent according to the above-mentioned item [12], wherein a content of the guanamine is 10 parts by mass or more and 99 parts by mass or less in 100 parts by mass of the anionic curing agent.
[14] The curing agent according to any one of the above-mentioned items [11] to [13], wherein the anionic curing agent is a combination including two or more kinds of amine-based curing agents.
[15] The curing agent according to the above-mentioned item [14], wherein the combination is a combination including at least two or more kinds of amines, a combination including at least an amine and a modified amine, or a combination including at least an amine and a phenol mixture.
[16] The curing agent according to the above-mentioned item [15], wherein the combination including at least two or more kinds of amines includes a guanamine and at least one selected from the group consisting of: a urea; and a tertiary amine.
[17] The curing agent according to the above-mentioned item [15], wherein the combination including at least an amine and a modified amine includes, as the amine, a guanamine and a tertiary amine.
[18] The curing agent according to the above-mentioned item [16] or [17], wherein a content of the tertiary amine is 0.1 part by mass or more and 10 parts by mass or less in 100 parts by mass of a total of the curing agent.
[19] The curing agent according to any one of the above-mentioned items [10] to [18], wherein a content of the compound is 5 parts by mass or more and 90 parts by mass or less in 100 parts by mass of the above-mentioned curing agent.
[20] The curing agent according to any one of the above-mentioned items [10] to [19], wherein a content of the anionic curing agent is 10 parts by mass or more and 95 parts by mass or less in 100 parts by mass of a total of the anionic curing agent and the compound.
[21] A curable composition, including: a compound having a structural unit having a tertiary amine structural group and having a weight-average molecular weight of 5,000 or more and 30,000 or less; and a curable compound.
[22] The curable composition according to the above-mentioned item [21], including an anionic curing agent.
[23] A cured product of the curable composition of the above-mentioned item [21] or [22].
[24] A method of producing a cured product, the method including a step of heating the curable composition of the above-mentioned item [21] or [22].
[25] A method of producing a curing agent material, the method including a reaction step of reacting: a polymer having a bonding functional group "b" which is at least one kind of group selected from the group consisting of: a hydroxy group, a carboxyl group, an epoxy group, and an amino group, and having a weight-average molecular weight of 3,000 or more and 25,000 or less; with a compound having a bonding functional group "c" capable of reacting with the bonding functional group "b" to form a covalent bond, and a tertiary amine structural group.
[26] The method of producing a curing agent material according to the above-mentioned item [25], wherein the polymer has, as a structural unit having the bonding functional group "b", a structural unit derived from an unsaturated dicarboxylic acid or an unsaturated dicarboxylic acid anhydride.

This disclosure is not limited to the above-mentioned embodiments. The above-mentioned embodiments are illustrative, and any embodiment having substantially the same configuration as that of the technical idea described in Claims of this disclosure, and exhibiting an action and effect similar thereto is encompassed in the technical scope of this disclosure.

### Examples

This disclosure is further described below in detail by way of Examples and the like, but this disclosure is not limited to these Examples.

The following materials were used for the respective components.

### (Compound B or Polymer 1 having Structural Unit derived from Compound B)

B1: styrene-maleic anhydride copolymer (Xiran 3000 manufactured by Polyscope; structural unit derived from styrene:structural unit derived from maleic anhydride=3:1 (molar ratio), weight-average molecular weight: 10,000)
B2: styrene-maleic anhydride copolymer (Xiran 1000 manufactured by Polyscope; structural unit derived from styrene:structural unit derived from maleic anhydride=1:1 (molar ratio), weight-average molecular weight: 5,000)
B3: succinic anhydride (molecular weight: 100.07)

### (Compound C)

C1: compound represented by the following formula (C1) (Adeka Hardener EHC-30 manufactured by ADEKA Corporation)

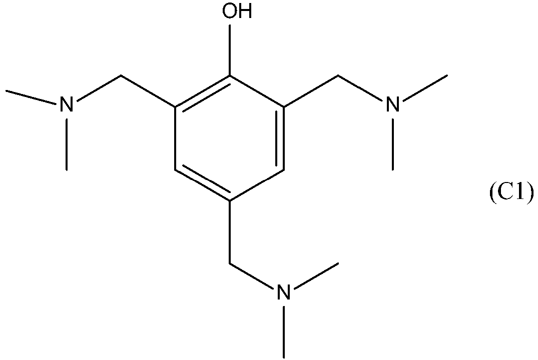

### [Example 1]

The respective components were reacted in accordance with a formulation shown in Table 1 below by the following procedure to produce a curing agent material including a compound A1.

100 Parts by mass of the compound B1 and 45 parts by mass of the compound C1 were loaded into 120 parts by mass of a toluene solvent, and were reacted with each other at 110°C for 3 hours while being stirred. The solvent was distilled off at 110°C, and finally a pressure around the residue was reduced to 40 hPa or less at from 140°C to 160°C, followed by heat drying. Thus, the compound A1 having a structural unit having a tertiary amine structural group was obtained. In Table 1, the numerical value in the upper row of the column "Compound C1" indicates the blending amount (part(s) by mass) of the compound C1 with respect to 100 parts by mass of the compound B1, and the numerical value in the lower row thereof indicates the molar ratio of the compound C1 with respect to 1 mol of the structural unit derived from maleic anhydride in the compound B1.

The weight-average molecular weight and amine value of the resultant compound A1 were measured under the following conditions. The measurement results are shown in Table 1.

### (Weight-average Molecular Weight)

·GPC: HLC-8320GPC (manufactured by Tosoh Corporation)
·Solvent: DMF (manufactured by FUJIFILM Wako Pure Chemical Corporation)/10 mM LiBr solution
·Flow rate: 0.6 mL/min
·Column: TSKgel guardcolumn SuperAW-H (4.6 mm I.D.×3.5 cm)×1+TSKgel SuperAWM-H (6.0 mm I.D.×15 cm)×2 (manufactured by Tosoh Corporation)

As column pretreatment, a DMF/100 mM triethylamine solution was passed through the column before measurement to mask an adsorption site in advance.
·Column temperature: 40°C
·Sample concentration: 1 mg/mL
·Injection volume: 20 µL
·Polystyrene standards for calibration curve: Mw 5,480,000, 1,090,000, 427,000, 96,400, 37,900, 10,200, 2,550, and 598 (manufactured by Tosoh Corporation)

### (Amine Value)

The amine value was measured on the basis of JIS K7237-1995.

### [Examples 2 to 4]

Compounds A2 to A4 each having a structural unit having a tertiary amine structural group were obtained in the same manner as in Example 1 in accordance with formulations shown in Examples 2 to 4 in Table 1 below. In Table 1, the numerical values in the upper row of the column "Compound C1" each indicate the blending amount (part(s) by mass) of the compound C1 with respect to 100 parts by mass of the compound B1 or the compound B2, and the numerical values in the lower row thereof each indicate the molar ratio of the compound C1 with respect to 1 mol of a structural unit derived from maleic anhydride in the compound B1 or the compound B2.

The measurement results of the weight-average molecular weights and amine values of the resultant compounds A2 to A4 are shown in Table 1. With regard to Example 3, a mixture of the compound A3 and the compound C1 that is unreacted is used as a sample, and the measurement result of the amine value of the entire sample is represented.

### [Comparative Example 1]

100 Parts by mass of the compound B3 and 270 parts by mass of the compound C1 were loaded into 100 parts by mass of a toluene solvent, and were reacted with each other at room temperature (25°C) for 0.5 hour while being stirred. After the reaction, the temperature was raised to 100°C, and the solvent was removed under reduced pressure to provide a compound A'1. In Comparative Example 1, in Table 1, the numerical value in the upper row of the column "Compound C1" indicates the blending amount (part(s) by mass) of the compound C1 with respect to 100 parts by mass of the compound B3, and the numerical value in the lower row thereof indicates the molar ratio of the compound C1 with respect to 1 mol of succinic anhydride in the compound B3.

The measurement result of the weight-average molecular weight of the resultant compound A'1 is shown in Table 1. The amine value of the compound A'1 obtained in Comparative Example 1 is determined by calculating the theoretical value of the amine value.

**Table 1**

| | | Example | | | | Comparative Example |
|---|---|---|---|---|---|---|
| | | 1 | 2 | 3 | 4 | 1 |
| | | Compound A1 | Compound A2 | Compound A3 | Compound A4 | Compound A'1 |
| Compound B | B1 | 100 | 100 | 100 | - | - |
| | B2 | - | - | - | 100 | - |
| | B3 | - | - | - | - | 100 |
| Compound C | C1 | 45 | 58 | 97 | 118 | 270 |
| | | 0.7 | 0.9 | 1.5 | 0.9 | 1.0 |
| Weight-average molecular weight (MW) | | 14,500.0 | 15,500.0 | 16,000.0 | 11,000.0 | 358 |
| Amine value (mgKOH/g) | | 154.5 | 192.5 | 278.7 | 272.8 | 450 (theoretical value) |

### [Examples 11 to 21 and Comparative Examples 11 to 15]

Curing agents were prepared in accordance with formulations shown in Tables 2 and 3 below. The numerical values in the columns "Curing agent material" and "Anionic curing agent" in Tables 2 and 3 each indicate a blending amount (part(s) by mass).

The following materials were used as the curing agent materials and the anionic curing agents.

### (Curing Agent Material)

A1 to A4: compounds A1 to A4 produced in Examples 1 to 4
A'1: compound A'1 produced in Comparative Example 1
B1: Xiran 3000 as described above
B2: Xiran 1000 as described above

### (Anionic Curing Agent)

C1: compound represented by the formula (C1) (Adeka Hardener EHC-30 manufactured by ADEKA Corporation)
C2: compound represented by the following formula (C2) (KAOLIZER No. 25 manufactured by Kao Corporation)
C3: dicyandiamide: Adeka Hardener EH-3636AS manufactured by ADEKA Corporation

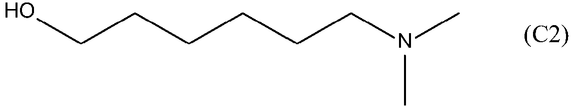

### [Evaluation]

Each of the resultant curing agents was evaluated for its storage stability and low-temperature curability in accordance with the following procedures. The results are shown in Tables 2 and 3.

### 1. Storage Stability

The curing agents obtained in Examples 11 to 21 and Comparative Examples 11 to 15 were blended in accordance with formulations shown below to provide evaluation compositions. Numerical values in the following formulations each represent the number of parts by mass.

### <Evaluation Composition>

·Curing agent: 10 parts by mass
·Epoxy compound 1: 60 parts by mass
·Phosphoric acid-modified epoxy resin: 10 parts by mass
·Rubber-modified epoxy resin: 10 parts by mass
·Blocked urethane: 20 parts by mass
·Filler (filler): 25 parts by mass
·Filler (thixotropic agent): 1 part by mass

The following materials were used as the respective components to be used for the evaluation compositions.
·Epoxy compound 1: Adeka Resin EP-4100E manufactured by ADEKA Corporation (bisphenol A-type epoxy resin, epoxy equivalent: 190 g/eq)
·Phosphoric acid-modified epoxy resin: Adeka Resin EP-49-10P2 manufactured by ADEKA Corporation (phosphoric acid-modified epoxy resin, epoxy equivalent: 300 g/eq)
·Rubber-modified epoxy resin: Adeka Resin EPR-1630 manufactured by ADEKA Corporation (rubber-modified epoxy resin, epoxy equivalent: 900 g/eq)
·Blocked urethane: Adeka Resin QR-9466 manufactured by ADEKA Corporation (blocked product of an IPDI-based urethane polyisocyanate compound, blocked isocyanate equivalent: 1,400 g/eq)
·Filler (filler): Whiton SB manufactured by Shiraishi Kogyo Kaisha, Ltd. (calcium carbonate)
·Filler (thixotropic agent): RY-200S manufactured by Nippon Aerosil Co., Ltd. (fumed silica)

### <Evaluation Method>

Each of the above-mentioned evaluation compositions was left to stand in an oven at 40°C, and was evaluated as "×" when the number of days until the composition lost its fluidity and gelled was less than 30 days, was evaluated as "Δ" when the fluidity was able to be maintained (the composition did not gel) but a significant increase in viscosity was observed, and was evaluated as "○" when the fluidity was maintained for 30 days or more. The gelation was determined by palpation with a needle-like object, and a state in which the initial fluidity was lost and the needle-like object did not fall over even when the needle-like object was stood up in the composition, or a state in which the composition was completely solidified and the needle-like object was not able to be stood up was defined as gelation.

### 2. Low-temperature Curability

Each of the evaluation compositions described in the section "1. Storage Stability" described above was applied to a 1 cm square frame having a thickness of 0.2 mm (200 µm), and was heat-cured with an oven at 120°C for 30 minutes. The intensity of a peak at 916 cm⁻¹ derived from an epoxy group of the resultant cured product was measured with a Fourier transform infrared spectrophotometer (FT-IR), and the curing rate (%) thereof was calculated with an intensity before the curing as 100, followed by an evaluation in accordance with the following criteria.$Curing rate = peak intensity after curing \times 100 / peak intensity before curing$

### [Evaluation Criteria]

⊚: 95% or more
∘: 90% or more and less than 95%
Δ: 85% or more and less than 90%
×: Less than 85%

**Table 2**

| | | | Example | | | | | | | | | | |
|---|---|---|---|---|---|---|---|---|---|---|---|---|---|
| | | | 11 | 12 | 13 | 14 | 15 | 16 | 17 | 18 | 19 | 20 | 21 |
| Curing agent | Curing agent material | A1 | 100 | - | - | - | - | - | - | - | - | 100 | - |
| | | A2 | - | 100 | - | - | - | - | - | - | - | - | 100 |
| | | A3 | - | - | 100 | - | 100 | 100 | 100 | 100 | 100 | - | - |
| | | A4 | - | - | - | 100 | - | - | - | - | - | - | - |
| | | A'1 | - | - | - | - | - | - | - | - | - | - | - |
| | | B1 | - | - | - | - | - | - | - | - | - | - | - |
| | | B2 | - | - | - | - | - | - | - | - | - | - | - |
| | Anionic curing agent | C1 | - | - | - | - | 4 | 12 | 20 | 28 | 35 | - | - |
| | | C2 | - | - | - | - | - | - | - | - | - | 4 | 4 |
| | | C3 | 230 | 230 | 230 | 230 | 230 | 230 | 230 | 230 | 230 | 230 | 230 |
| Evaluation | Storage stability | | ○ | ○ | ○ | ○ | ○ | ○ | ○ | Δ | Δ | ○ | ○ |
| | Low-temperature curability | | Δ | ⊚ | ⊚ | Δ | ⊚ | ⊚ | ⊚ | ○ | ○ | ⊚ | ⊚ |

**Table 3**

| | | | Comparative Example | | | | |
|---|---|---|---|---|---|---|---|
| | | | 11 | 12 | 13 | 14 | 15 |
| Curing agent | Curing agent material | A1 | - | - | - | - | - |
| | | A2 | - | - | - | - | - |
| | | A3 | - | - | - | - | - |
| | | A4 | - | - | - | - | - |
| | | A'1 | - | - | 100 | - | - |
| | | B1 | - | - | - | 70 | - |
| | | B2 | - | - | - | - | 56 |
| | Anionic curing agent | C1 | - | 65 | - | 30 | 44 |
| | | C2 | - | - | - | - | - |
| | | C3 | 230 | 230 | 230 | 230 | 230 |
| Evaluation | Storage stability | | ○ | × | × | × | × |
| | Low-temperature curability | | × | ⊚ | ○ | ⊚ | ⊚ |

### [Examples 31 to 52 and Comparative Examples 31 to 40]

Curing agents were prepared in accordance with formulations shown in Table 4 to Table 6 below. The numerical values in the columns "Curing agent material" and "Anionic curing agent" in Table 4 to Table 6 each indicate a blending amount (part(s) by mass).

The following materials were used as the curing agent materials and the anionic curing agents.

### (Curing Agent Material)

A2: compound A2 produced in Example 2

### (Anionic Curing Agent)

C1: compound represented by the formula (C1) (Adeka Hardener EHC-30 manufactured by ADEKA Corporation)
C3: dicyandiamide: Adeka Hardener EH-3636AS manufactured by ADEKA Corporation
C4: compound represented by the following formula (C4) (UR300 manufactured by Alzchem Group AG)
C5: compound represented by the following formula (C5) (UR500 manufactured by Alzchem Group AG)
C6: compound represented by the following formula (C6) (UR200 manufactured by Alzchem Group AG)
C7: phenol mixture containing an epoxy resin-modified product of a tertiary amine having at least one of a primary amino group or a secondary amino group (EH-5046S manufactured by ADEKA Corporation)
C8: modified amine containing an epoxy resin-modified product of a urea structure amine compound having at least one of a primary amino group or a secondary amino group (EH-4370S manufactured by ADEKA Corporation)
C9: modified amine containing an epoxy resin-modified product of a urea structure amine compound having at least one of a primary amino group or a secondary amino group (EH-4360S manufactured by ADEKA Corporation)
C10: phenol mixture containing an epoxy resin-modified product of an aliphatic polyamine (EH-5030S manufactured by ADEKA Corporation)
C11: phenol mixture containing an epoxy resin-modified product of an aliphatic polyamine (EH-4358S manufactured by ADEKA Corporation)

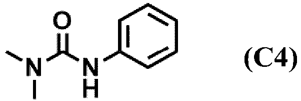

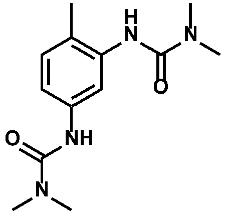

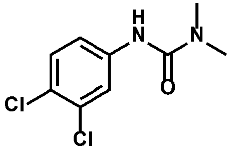

### 3. Storage Stability 2

The curing agents obtained in Examples 31 to 52 and Comparative Examples 31 to 40 were blended in accordance with formulations shown below to provide evaluation compositions. Numerical values in the following formulations each represent the number of parts by mass.

The term "part(s) by mass shown in Table 4 to Table 6" described as the blending amount of a curing agent in an evaluation composition means that, for example, for Example 31, 1.66 parts by mass of the compound A2, 0.34 part by mass of the compound C1, and 7 parts by mass of the compound C3 are blended with respect to 60 parts by mass of the epoxy compound 1.

In addition, the respective components to be used for the evaluation compositions are the same as those described in the section "1. Storage Stability."

The resultant evaluation compositions were each evaluated by a thickening rate (viscosity change rate) from an initial stage at the time of its storage (standing) in a container at 40°C for 30 days with an E-type rotational viscometer (manufactured by Toki Sangyo Co., Ltd.).

Specifically, each evaluation composition was prepared, and the initial viscosity of the evaluation composition immediately after the preparation at 25°C was obtained by measurement for 3 minutes at a number of revolutions of 2 rpm with an E-type rotational viscometer.

In addition, each of the above-mentioned evaluation compositions was loaded into a sealed container, and was stored in an oven at 40°C for 30 days. After that, the composition was cooled to 25°C, and its viscosity after 30 days was obtained by measurement for 3 minutes at a number of revolutions of 2 rpm with an E-type rotational viscometer in the same manner as the initial viscosity.

The thickening rate was calculated by using the resultant initial viscosity and viscosity after 30 days in accordance with the following equation (A), and was evaluated in accordance with the following evaluation criteria. The results are shown in Tables 4 to 6 below. It can be determined that the evaluation composition is more excellent in storage stability as its thickening rate is lower. 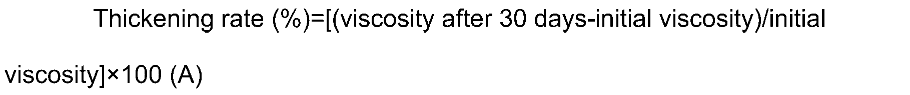 Thickening rate (%)=[(viscosity after 30 days-initial viscosity)/initial viscosity]×100 (A)

### <Evaluation Composition>

·Curing agent: part(s) by mass shown in Table 4 to Table 6
·Epoxy compound 1: 60 parts by mass
·Phosphoric acid-modified epoxy resin: 10 parts by mass
·Rubber-modified epoxy resin: 10 parts by mass
·Blocked urethane: 20 parts by mass
·Filler (filler): 25 parts by mass
·Filler (thixotropic agent): 1 part by mass

### <Evaluation Criteria>

5: The thickening rate is 50% or less.
4: The thickening rate is more than 50% and 200% or less.
3: The thickening rate is more than 200%.
2: The fluidity is lost and gelation/curing occurs after more than 1 week and before 30 days.
1: The fluidity is lost and gelation/curing occurs within 1 week.

### 4. Low-temperature Curability 2

The curing agents obtained in Examples 31 to 52 and Comparative Examples 31 to 40 were evaluated by differential scanning calorimetry (DSC measurement).

Specifically, each of the evaluation compositions prepared in the section "3. Storage Stability 2" was subjected to DSC measurement under the following measurement conditions, and its peak top temperature was measured. The results are shown in Table 4 to Table 6 below. The peak top indicates the temperature at which the maximum heat generation amount is observed within a scanning range. It can be determined that the evaluation composition is more excellent in low-temperature curability as its peak top temperature is lower.

### (DSC Measurement Conditions)

Apparatus: Q2000 (differential scanning calorimeter manufactured by TA Instruments)
Temperature increase rate: 3°C/min
Operating temperature range: from 30°C to 250°C

### 5. Adhesiveness

An iron test piece having one surface subjected to polishing treatment was used as an adherend, and each of the evaluation compositions prepared in the section "3. Storage Stability 2" was applied thereto, and was cured at 140°C for 30 minutes in accordance with JIS K 6854-3. After that, its T-peel strength (kN/m) at 25°C was measured, and was evaluated in accordance with the following evaluation criteria. The results are shown in Table 4 to Table 6 below. It can be determined that the evaluation composition is more excellent in adhesiveness as the value of its peeling strength is higher.

### <Evaluation Criteria>

⊚: 7.0 kN/m or more
○: 5.0 kN/m or more and less than 7.0 kN/m
Δ: 2.0 kN/m or more and less than 5.0 kN/m
×: Less than 2.0 kN/m

**Table 4**

| | | Example | | | | | | | | | | |
|---|---|---|---|---|---|---|---|---|---|---|---|---|
| | | 31 | 32 | 33 | 34 | 35 | 36 | 37 | 38 | 39 | 40 | 41 |
| Curing agent material | A2 | 1.66 | 0.83 | 0.56 | 0.33 | 0.17 | 0.08 | 0.83 | 0.83 | 0.83 | 0.83 | 0.83 |
| Anionic curing agent | C1 | 0.34 | 0.17 | 0.11 | 0.07 | 0.03 | 0.02 | 0.17 | 0.17 | 0.17 | 0.17 | 0.17 |
| | C3 | 7 | 7 | 7 | 7 | 7 | 7 | 7 | 7 | 7 | 7 | 7 |
| | C4 | - | 1 | 1.33 | 1.6 | 1.8 | 1.9 | - | - | - | - | - |
| | C5 | - | - | - | - | - | - | 1 | - | - | - | - |
| | C6 | - | - | - | - | - | - | - | 1 | - | - | - |
| | C7 | - | - | - | - | - | - | - | - | 1 | - | - |
| | C8 | - | - | - | - | - | - | - | - | - | - | 1 |
| | C9 | - | - | - | - | - | - | - | - | - | 1 | - |
| | C10 | - | - | - | - | - | - | - | - | - | - | - |
| | C11 | - | - | - | - | - | - | - | - | - | - | - |
| Evaluation | Storage stability 2 | 5 | 5 | 5 | 5 | 5 | 5 | 5 | 5 | 4 | 4 | 5 |
| | Low-temperature curability 2 (°C) | 143 | 144 | 146 | 149 | 152 | 154 | 142 | 149 | 150 | 151 | 150 |
| | Adhesiveness | ○ | ⊚ | ⊚ | ⊚ | ⊚ | Δ | ⊚ | Δ | ○ | Δ | ○ |

**Table 5**

| | | Example | | | | | | | | | | |
|---|---|---|---|---|---|---|---|---|---|---|---|---|
| | | 42 | 43 | 44 | 45 | 46 | 47 | 48 | 49 | 50 | 51 | 52 |
| Curing agent material | A2 | 0.83 | 0.83 | 0.58 | 0.33 | 0.17 | 0.58 | 0.33 | 0.17 | 3.32 | 4.98 | 6.64 |
| Anionic curing agent | C1 | 0.17 | 0.17 | 0.12 | 0.07 | 0.03 | 0.12 | 0.07 | 0.03 | 0.68 | 1.02 | 1.36 |
| | C3 | 7 | 7 | 7 | 7 | 7 | 7 | 7 | 7 | 7 | 7 | 7 |
| | C4 | - | - | - | - | - | - | - | - | - | - | - |
| | C5 | - | - | 1.3 | 1.6 | 1.8 | - | - | - | - | - | - |
| | C6 | - | - | - | - | - | - | - | - | - | - | - |
| | C7 | - | - | - | - | - | 1.3 | 1.6 | 1.8 | - | - | - |
| | C8 | - | - | - | - | - | - | - | - | - | - | - |
| | C9 | - | - | - | - | - | - | - | - | - | - | - |
| | C10 | 1 | - | - | - | - | - | - | - | - | - | - |
| | C11 | - | 1 | - | - | - | - | - | - | - | - | - |
| Evaluation | Storage stability 2 | 4 | 4 | 5 | 5 | 5 | 3 | 2 | 2 | 5 | 5 | 5 |
| | Low-temperature curability 2 (°C) | 158 | 158 | 143 | 145 | 146 | 150 | 153 | 155 | 131 | - | 122 |
| | Adhesiveness | Δ | Δ | ⊚ | ⊚ | ○ | Δ | Δ | Δ | ○ | Δ | ○ |

**Table 6**

| | | Comparative Example | | | | | | | | | |
|---|---|---|---|---|---|---|---|---|---|---|---|
| | | 31 | 32 | 33 | 34 | 35 | 36 | 37 | 38 | 39 | 40 |
| Curing agent material | A2 | - | - | - | - | - | - | - | - | - | - |
| Anionic curing agent | C1 | - | - | - | - | - | - | - | - | - | - |
| | C3 | 7 | 7 | 7 | 7 | 7 | 7 | 7 | 7 | 7 | 7 |
| | C4 | 1 | 2 | - | - | - | - | - | - | - | - |
| | C5 | - | - | 2 | - | - | - | - | - | - | - |
| | C6 | - | - | - | 2 | - | - | - | - | - | - |
| | C7 | - | - | - | - | 2 | - | - | - | - | - |
| | C8 | - | - | - | - | - | 2 | - | - | - | - |
| | C9 | - | - | - | - | - | - | 2 | - | - | - |
| | C10 | - | - | - | - | - | - | - | 2 | - | - |
| | C11 | - | - | - | - | - | - | - | - | 2 | - |
| Evaluation | Storage stability 2 | 5 | 5 | 4 | 4 | 2 | 4 | 4 | 4 | 4 | 5 |
| | Low-temperature curability 2 (°C) | 167 | 158 | 150 | 163 | 156 | 161 | 163 | 178 | 180 | 196 |
| | Adhesiveness | × | Δ | Δ | × | Δ | × | × | × | × | × |

### [Summary]

It was able to be recognized from Tables 1 to 3 that a curing agent having excellent low-temperature curability and storage stability was able to be formed by using the curing agent material of Examples, that is, the compound A.

It was able to be recognized from Tables 4 and 5 that a curing agent having excellent low-temperature curability and storage stability was able to be formed by using the curing agent material of Examples, that is, the compound A. More specifically, it was able to be recognized that a curing agent having excellent low-temperature curability and storage stability as compared to those of Comparative Example 40 was able to be formed in each of Examples.

Comparison between Comparative Examples 31 and 32, and Examples 31 to 36 was able to recognize that a curing agent having excellent low-temperature curability was able to be formed by using the compound A as compared to a curing agent including only an anionic curing agent.

Comparison between Comparative Example 33, and Examples 37 and 44 to 46 was able to recognize that a curing agent having excellent low-temperature curability was able to be formed by using the compound A as compared to a curing agent including only an anionic curing agent.

Comparison between Comparative Example 34, and Examples 38 and 47 to 49 was able to recognize that a curing agent having excellent low-temperature curability was able to be formed by using the compound A as compared to a curing agent including only an anionic curing agent.

Comparison between Example 31, and Examples 32, 37, and the like was able to recognize that a cured product having excellent low-temperature curability and storage stability, and further having excellent adhesiveness was able to be formed by using a urea as an anionic curing agent in combination with the compound A.

## Claims

1. A curing agent material, comprising a compound having a structural unit having a tertiary amine structural group and having a weight-average molecular weight of 5,000 or more and 30,000 or less.

2. The curing agent material according to claim 1, wherein the curing agent material is for use in combination with an anionic curing agent.

3. The curing agent material according to claim 1, wherein the tertiary amine structural group has a tertiary amino group.

4. The curing agent material according to claim 1, wherein the structural unit having the tertiary amine structural group has at least one of a hydroxy group or a carboxyl group.

5. The curing agent material according to claim 1, wherein the structural unit having the tertiary amine structural group has a structural unit represented by the following general formula (100): 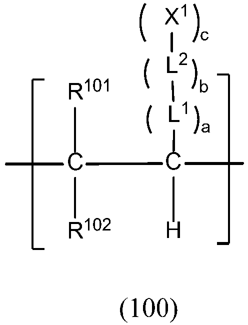 where
R¹⁰¹ and R¹⁰² each independently represent a hydrogen atom, a halogen atom, a cyano group, a nitro group, a hydroxy group, a thiol group, a carboxyl group, a substituted or unsubstituted hydrocarbon group having 1 to 20 carbon atoms, or a group in which a methylene group in the hydrocarbon group is substituted with a divalent group selected from Group B below,
L¹ represents a divalent group selected from -O-, -CO-, -CO-O-, -O-CO-, - CO-NR¹⁰³-, and -NR¹⁰³-CO-,
R¹⁰³ represents a hydrogen atom, a substituted or unsubstituted hydrocarbon group having 1 to 10 carbon atoms, or a group in which a methylene group in the hydrocarbon group is substituted with a divalent group selected from Group B below,
L² represents a (c+1)-valent hydrocarbon group having 1 to 20 carbon atoms or a group in which a methylene group in the hydrocarbon group is substituted with a divalent group selected from Group B below,
X¹ represents a tertiary amine structural group,
Group B represents -O-, -CO-, -CO-O-, -O-CO-, -NH-, -NHCO-, and -S-,
"a" represents an integer of 0 or 1,
"b" represents an integer of 0 or 1, and
"c" represents an integer of from 1 to 10.

6. The curing agent material according to claim 1, wherein a content of the structural unit having the tertiary amine structural group is 1 part by mass or more and 99 parts by mass or less in 100 parts by mass of the compound.

7. The curing agent material according to claim 4, wherein the compound has, as a structural unit except the structural unit having the tertiary amine structural group, a structural unit derived from at least one compound selected from the group consisting of: a hydroxy group-containing ethylenically unsaturated compound, a carboxyl group-containing ethylenically unsaturated compound, and an aromatic unsaturated compound.

8. A curing agent, comprising:
a compound having a structural unit having a tertiary amine structural group and having a weight-average molecular weight of 5,000 or more and 30,000 or less; and
an anionic curing agent.

9. The curing agent according to claim 8, wherein the anionic curing agent contains an amine-based curing agent.

10. A curable composition, comprising:
a compound having a structural unit having a tertiary amine structural group and having a weight-average molecular weight of 5,000 or more and 30,000 or less; and
a curable compound.

11. The curable composition according to claim 10, comprising an anionic curing agent.

12. A cured product of the curable composition of claim 11.

13. A method of producing a cured product, the method comprising a step of heating the curable composition of claim 11.

14. A method of producing a curing agent material, the method comprising a reaction step of reacting:
a polymer having a bonding functional group "b" which is at least one kind of group selected from the group consisting of: a hydroxy group, a carboxyl group, an epoxy group, and an amino group, and having a weight-average molecular weight of 3,000 or more and 25,000 or less;
with a compound having a bonding functional group "c" capable of reacting with the bonding functional group "b" to form a covalent bond, and a tertiary amine structural group.

15. The method of producing a curing agent material according to claim 14, wherein the polymer has, as a structural unit having the bonding functional group "b", a structural unit derived from an unsaturated dicarboxylic acid or an unsaturated dicarboxylic acid anhydride.
